# EUROPEAN PATENT APPLICATION

(11) **EP 4 531 410 A1**
(43) Date of publication of application: **02.04.2025**
(21) Application number: 23862378.9
(22) Date of filing: 05.09.2023
(51) Int. Cl.: H04N 23/60

(54) **VOLTAGE ADJUSTMENT METHOD AND RELATED APPARATUS**

(30) Priority: 06.09.2022 CN 202211083452
(71) Applicant: Huawei Technologies Co., Ltd., Shenzhen, Guangdong 518129 (CN)
(72) Inventor: YAO, Chengjun, Shenzhen, Guangdong 518129 (CN)
(74) Representative: MERH-IP Matias Erny Reichl Hoffmann Patentanwälte PartG mbB
(86) International application number: PCT/CN2023/116991
(87) International publication number: WO 2024/051684

(57) **Abstract**

This application discloses a voltage adjustment method and a related apparatus. The method is used to adjust a voltage of a driver chip in a camera module. For a driver chip that controls movement of a lens, a drive voltage of the driver chip may be adjusted based on a pushing force required for the lens to move to a target position, so that the driver chip that controls the movement of the lens is not always at a high voltage. Alternatively, for a driver chip that controls a change in an aperture size, a drive voltage of the driver chip may be adjusted based on whether the aperture size changes, so that the driver chip that controls the change in the aperture size is not always at a high voltage. This can reduce power consumption of a camera module used in current shooting.

## Description

This application claims priority to Chinese Patent Application No. 202211083452.1, filed with the China National Intellectual Property Administration on September 6, 2022 and entitled "VOLTAGE ADJUSTMENT METHOD AND RELATED APPARATUS", which is incorporated herein by reference in its entirety.

### TECHNICAL FIELD

This application relates to the terminal field, and in particular, to a voltage adjustment method and a related apparatus.

### BACKGROUND

A camera module is one of modules with highest power consumption in a terminal device (for example, a mobile phone). How to reduce power consumption of the camera module is a research focus of developers.

Currently, the terminal device usually includes a plurality of camera modules, for example, a long-focus camera module, a wide-angle camera module, and an ultra-wide-angle camera module. To reduce the power consumption of the camera module, a method is: switching a camera module used in a shooting mode selected by a user to an operating mode, and switching an operating mode of another camera module to a low power consumption mode, to reduce power consumption of the another camera module as much as possible. For example, when the user selects a wide-angle shooting mode, the wide-angle camera module is switched to the operating mode, an image captured by a wide-angle camera is displayed in a user interface, and the another camera module is switched to the low power consumption mode.

However, in the method, only power consumed by another camera module not related to a current shooting process can be reduced, and power consumption of a camera module currently used in the current shooting process is not improved. Therefore, how to reduce the power consumption of the camera module used in the current shooting process is an urgent problem to be resolved currently.

### SUMMARY

This application provides a voltage adjustment method and a related apparatus, to dynamically adjust a drive voltage of a driver chip in a camera. This reduces power consumption of the camera.

An embodiment of this application provides a voltage adjustment method. The method is applied to an electronic device including a camera. The camera includes a lens, a motor, and a driver chip. The method includes: The electronic device starts the camera, and captures an image by using the camera; the electronic device provides a first drive voltage for the driver chip, to drive the motor to move the lens to a first position; and the electronic device provides a second drive voltage for the driver chip, to drive the motor to move the lens to a second position, where the second drive voltage is different from the first drive voltage, and the second position is different from the first position.

According to the method provided in the first aspect, in a process of capturing the image by using the camera, the electronic device may dynamically adjust a drive voltage of the driver chip based on a position to which the lens moves, to prevent the driver chip from being always in a high voltage state. This reduces power consumption of the driver chip, and further reduces power consumption of the camera used in a shooting process.

With reference to the first aspect, in some implementations, the second drive voltage is higher than the first drive voltage, a distance between the second position and a third position is greater than a distance between the first position and the third position, and the third position is a position of the lens when the motor does not move the lens.

A longer distance between the second position or the third position and the first position indicates a larger pushing force to be applied by the motor, and a higher drive voltage required by the driver chip.

In other words, a shorter distance between the position to which the lens moves and an initial position indicates a lower drive voltage of the driver chip. In this case, when the lens moves at a shorter distance, the drive voltage of the driver chip may be reduced, to prevent the lens from still applying a high voltage to the driver chip when the lens moves at the shorter distance. Therefore, the driver chip can move the lens to a specified position, and power consumption of the driver chip can be reduced.

With reference to the first aspect, in some implementations, the method further includes: The electronic device provides a third drive voltage for the driver chip, to drive the motor to move the lens to the first position. A posture of the electronic device when the electronic device provides the third drive voltage is different from a posture of the electronic device when the electronic device provides the first drive voltage. The third drive voltage is different from the first drive voltage.

Due to impact of factors such as gravity and inertia, when postures of the electronic device are different, different pushing forces need to be applied when the motor moves the lens to a same position. Therefore, when controlling the lens to move to the specified position, the electronic device further determines, with reference to a posture of the electronic device, a voltage to be applied to the driver chip. In this case, when the electronic device is in a posture in which the motor is easier to push the lens, the electronic device can further reduce the voltage of the driver chip, and further reduce power consumption of the driver chip. This reduces power consumption of the camera in an operating process as much as possible.

With reference to the first aspect, in some implementations, the posture of the electronic device is an included angle between a plane of the lens and a horizontal plane, when the electronic device provides the third drive voltage, an included angle between the plane of the lens and the horizontal plane is a first included angle, when the electronic device provides the first drive voltage, the plane of the lens and the horizontal plane are a second included angle; and the first included angle is less than the second included angle, and the third drive voltage is higher than the first drive voltage.

The motor moves the lens in a horizontal direction more easily than the motor moves the lens in a vertical direction. Therefore, a specific direction in which the motor moves the lens may be indicated based on a posture of the electronic device, namely, the included angle between the lens and the horizontal plane, to further determine the drive voltage of the driver chip. When the included angle between the plane of the lens and the horizontal plane is larger, that is, the plane of the lens is more perpendicular to the horizontal plane, the motor is closer to moving the lens in the horizontal direction. When the lens needs to move to a same position, a voltage required by the driver chip is lower.

With reference to the first aspect, in some implementations, definition of an image captured by the camera when the lens is at the second position is higher than definition of an image captured by the camera when the lens is at a position other than the second position; and after the electronic device provides the second drive voltage for the driver chip, to drive the motor to move the lens to the second position, the method further includes: The electronic device continuously provides a fourth drive voltage for the driver chip, to drive the motor to keep the lens at the second position.

To be specific, the electronic device may move the position of the lens in an automatic focusing process, to adjust the definition of the image captured by the camera, and adjust the voltage of the driver chip based on the position to which the lens moves, until the image definition reaches the highest. The electronic device ends automatic focusing, and keeps the lens in a position corresponding to the current highest definition. This can reduce power consumption of the camera in the automatic focusing process.

With reference to the first aspect, in some implementations, the first position and the second position are determined based on an operation that is input by a user to adjust a position of the lens.

In other words, the electronic device may move the position of the lens in a manual focusing process, determine the position of the lens based on an operation input by a user, and further adjust the voltage of the driver chip based on the position. This can reduce power consumption of the camera in the manual focusing process.

With reference to the first aspect, in some implementations, that the electronic device provides a first drive voltage for the driver chip, to drive the motor to move the lens to a first position; and the electronic device provides a second drive voltage for the driver chip, to drive the motor to move the lens to a second position specifically includes: The electronic device provides the first drive voltage for the driver chip, and provides a first current for the motor based on a first proportional-integral-differential PID parameter by using the driver chip, to drive the motor to move the lens to the first position; and the electronic device provides the second drive voltage for the driver chip, and provides a second current for the motor based on a second proportional-integral-differential PID parameter by using the driver chip, to drive the motor to move the lens to the second position.

The proportional-integral-differential PID parameter may be used to improve lens movement precision in a process in which the driver chip controls the motor to move the lens, and increase a speed at which the lens moves to a target position in a focusing process. In this case, when the voltage of the driver chip needs to be adjusted, the electronic device may update the PID parameter to ensure the lens movement precision.

With reference to the first aspect, in some implementations, the electronic device pre-stores the first proportional-integral-differential PID parameter and the second proportional-integral-differential PID parameter.

With reference to the first aspect, in some implementations, after the electronic device captures the image by using the camera, the method further includes: The electronic device displays the image captured by using the camera, where definition of an image captured by the electronic device when the lens is at the first position is different from definition of an image captured when the lens is at the second position.

That is, in a process in which the electronic device adjusts the position of the lens, the user may view, by using a display of the electronic device, images captured by the camera whose definition dynamically changes with a change in the position of the lens.

With reference to the first aspect, in some implementations, the method further includes: When starting the camera, the electronic device provides the fourth drive voltage for the driver chip, to drive the motor to move the lens to a fourth position, where the fourth drive voltage is a preset voltage.

Initially, when the electronic device starts the camera, the electronic device may provide one preset voltage for the driver chip, so that the motor can quickly move the lens to an initial position, to quickly start focusing of the camera.

With reference to the first aspect, in some implementations, the preset voltage is a high voltage. For example, the high voltage may be a voltage whose voltage value is higher than a specific threshold.

To avoid a case in which the driver chip cannot drive the motor to move the lens to the initial position when the voltage of the driver chip is excessively low, the electronic device may provide one high voltage for the driver chip by default when starting the camera.

According to a second aspect, an embodiment of this application provides a voltage adjustment method. The method is applied to an electronic device including a camera. The camera includes an aperture, a motor, and a driver chip. The method includes: The electronic device starts the camera, and captures an image by using the camera; the electronic device provides a first drive voltage for the driver chip, to drive the motor to change a diameter size of the aperture, for adjusting an f-number of the aperture to a first value; and the electronic device adjusts the first drive voltage to a second drive voltage, where the first drive voltage is higher than the second drive voltage.

According to the method provided in the second aspect, the electronic device may provide a high voltage for the driver chip when adjusting the aperture, and provide a low voltage for the driver chip after the aperture adjustment ends. This can prevent the driver chip from being always at a high voltage, reduce power consumption of the driver chip, and further reduce power consumption of the camera used in a shooting process.

With reference to the second aspect, in some implementations, that the electronic device provides a first drive voltage for the driver chip specifically includes: The electronic device adjusts a voltage provided for the driver chip from a third drive voltage to the first drive voltage, where the third drive voltage is lower than the first drive voltage.

Before the electronic device adjusts the aperture, the electronic device may also provide a low voltage for the driver chip. In other words, the driver chip is at a high voltage only in a process of adjusting the aperture, so that the voltage of the driver chip can be dynamically adjusted based on whether the aperture is adjusted.

With reference to the second aspect, in some implementations, the third drive voltage is equal to the second drive voltage.

To be specific, the driver chip has totally two voltages: one higher voltage, and one lower voltage. When the aperture is adjusted, the drive voltage of the driver chip is the higher voltage. When the aperture is not adjusted, the driver chip of the driver chip is the lower voltage.

With reference to the second aspect, in some implementations, that the electronic device provides a first drive voltage for the driver chip, to drive the motor to change a diameter size of the aperture, for adjusting an f-number of the aperture to a first value specifically includes: The electronic device provides the first drive voltage for the driver chip, and provides one or more currents for the motor by using the driver chip, to drive the motor to adjust the diameter size of the aperture to a first size, for adjusting the f-number of the aperture to the first value, where the plurality of currents include a first current and a second current, and the second current is determined based on a diameter size of the aperture that is adjusted by the motor under an action of the first current.

In the process of adjusting the aperture, the driver chip may reversely adjust, based on a position to which an aperture blade moves, a pushing force applied by the motor to the aperture blade, to adjust the diameter size of the aperture to a more accurate size corresponding to the f-number.

With reference to the second aspect, in some implementations, after the electronic device adjusts the first drive voltage to the second drive voltage, the method further includes: The electronic device provides one or more currents for the motor by using the driver chip, to drive the motor to keep the diameter size of the aperture at the first size.

After the aperture adjustment ends, when the electronic device adjusts the voltage of the driver chip from a high voltage to a low voltage, the driver chip may dynamically adjust the pushing force of the motor, to keep the diameter size of the aperture unchanged. This avoids a case in which a voltage change in the driver chip causes aperture jitter, affecting image output effect of the camera.

With reference to the second aspect, in some implementations, the first value is an f-number of the aperture other than a maximum f-number and a minimum f-number.

To be specific, when the aperture needs to be adjusted to an aperture other than a maximum aperture and a minimum aperture, the aperture may be adjusted in a manner in which the driver chip reversely adjusts the pushing force of the motor based on a specific position of the aperture blade, so that the aperture is more precisely adjusted.

With reference to the second aspect, in some implementations, that the electronic device provides a first drive voltage for the driver chip, to drive the motor to change a diameter size of the aperture, for adjusting an f-number of the aperture to a first value specifically includes: The electronic device provides the first drive voltage for the driver chip, and provides a third current for the motor by using the driver chip, to cause the motor to generate a first pushing force to change the diameter size of the aperture, for adjusting the f-number of the aperture to the first value.

In the process of adjusting the aperture, the driver chip may not reversely adjust, based on the position to which the aperture blade moves, the pushing force applied by the motor, and the driver chip may provide only one fixed current for the motor, so that the motor generates a pushing force under an action of the current, to adjust the diameter size of the aperture, quickly completing aperture adjustment.

With reference to the second aspect, in some implementations, after the electronic device adjusts the first drive voltage to the second drive voltage, the method further includes: The electronic device provides a second voltage for the driver chip, and provides a fourth current for the motor by using the driver chip, to cause the motor to keep a change in the diameter size under an action of a second pushing force.

The fourth current may be less than a maximum current that can be provided by the driver chip for the motor under driving of the second voltage. This can further reduce power consumption of the driver chip, and improve power consumption of the camera used in a current shooting process.

With reference to the second aspect, in some implementations, the first value is the maximum f-number or the minimum f-number of the aperture.

In other words, when the aperture needs to be adjusted to the maximum aperture or the minimum aperture, the manner in which the driver chip provides only one fixed current for the motor may be used to adjust the aperture.

With reference to the second aspect, in some implementations, the electronic device pre-stores the third current and/or the fourth current.

With reference to the second aspect, in some implementations, the first value is an f-number of the aperture when brightness of the image captured by the electronic device is equal to a threshold.

The electronic device may adjust an aperture size, so that brightness of an image captured by the camera reaches the threshold, and image brightness is neither extremely bright nor extremely dark. In other words, the electronic device may dynamically change the voltage of the driver chip based on the aperture adjustment in an automatic exposure process, to reduce power consumption of the camera in the automatic exposure process.

With reference to the second aspect, in some implementations, the method further includes: The electronic device detects a second operation, where the second operation is used to indicate the first value.

In other words, in a process in which the user manually adjusts the aperture, the electronic device may dynamically change the voltage of the driver chip based on the aperture adjustment, to reduce power consumption generated by the camera in the process in which the user manually adjusts the aperture.

With reference to the second aspect, in some implementations, after the electronic device captures the image by using the camera, the method further includes: The electronic device displays the image captured by using the camera, where brightness and/or a depth of field of the captured image are different before and after the electronic device adjusts the f-number to the first value.

In other words, the electronic device may display, in the process of adjusting the aperture, the image whose brightness or depth of field or both change with the aperture adjustment.

According to a third aspect, an embodiment of this application provides an electronic device, including a camera, a memory, one or more processors, and one or more programs. The camera includes a lens, a motor, and a driver chip. When the one or more processors execute the one or more programs, the electronic device is enabled to implement the method according to the first aspect or any one of the implementations of the first aspect.

According to a fourth aspect, an embodiment of this application provides an electronic device, including a camera, a memory, one or more processors, and one or more programs. The camera includes an aperture, a motor, and a driver chip. When the one or more processors execute the one or more programs, the electronic device is enabled to implement the method according to the first aspect or any one of the implementations of the first aspect.

According to a fifth aspect, an embodiment of this application provides a computer-readable storage medium, including instructions. When the instructions are run on an electronic device, the electronic device is enabled to perform the method according to the first aspect or any one of the implementations of the first aspect, or the second aspect or any one of the implementations of the second aspect.

According to a sixth aspect, an embodiment of this application provides a computer program product. When the computer program product runs on a computer, the computer is enabled to perform the method according to the first aspect or any one of the implementations of the first aspect, or the second aspect or any one of the implementations of the second aspect.

According to the voltage adjustment methods provided in embodiments of this application, the voltage of the driver chip in the camera can be adjusted. For the driver chip that controls movement of the lens, the drive voltage of the driver chip may be dynamically adjusted based on the pushing force required for the lens to move to the target position, so that the driver chip that controls the movement of the lens is not always at a high voltage. Alternatively, for the driver chip that controls the change in the aperture size, the drive voltage of the driver chip may be adjusted based on whether the aperture changes, so that the driver chip that controls the change in the aperture is not always at a high voltage. This can reduce the power consumption of the camera used in the current shooting process, and prolong standby time of the electronic device in a process of using the camera.

### BRIEF DESCRIPTION OF DRAWINGS

FIG. 1A is a diagram of a hardware structure of an electronic device 100 according to an embodiment of this application;
FIG. 1B is a block diagram of a software structure of an electronic device 100 according to an embodiment of this application;
FIG. 2 is a diagram of a structure of a voltage adjustment apparatus according to an embodiment of this application;
FIG. 3 is a diagram related to focusing according to an embodiment of this application;
FIG. 4 is a schematic flowchart of a voltage adjustment method according to an embodiment of this application;
FIG. 5 is a diagram of a mapping relationship between a position of a lens and a voltage according to an embodiment of this application;
FIG. 6 is a diagram related to aperture adjustment according to an embodiment of this application;
FIG. 7 is a schematic flowchart of another voltage adjustment method according to an embodiment of this application; and
FIG. 8 shows f-numbers included in an electronic device 100 according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" indicates "or". For example, A/B may indicate A or B. In this specification, "and/or" merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A camera module includes a plurality of components. For example, one camera module may include components such as a lens, an aperture, a motor, a photosensitive chip, and a driver chip. In general, the camera module is in an operating state in a shooting process, but some components in the camera module may not actually need to be always in an operating state.

For example, the motor may be configured to drive the lens to move, to adjust definition of an image displayed by a device and implement focusing in a shooting process. If the motor needs only a relatively small pushing force to push the lens or does not need to push the lens, a drive voltage of a driver chip that controls the motor may be reduced. This reduces power consumption of the driver chip and improves power consumption of the camera module used in the shooting process. For ease of description, the motor that pushes the lens to move is referred to as a focus motor below.

For another example, the aperture may be used to change an amount of incident light, and brightness or a depth of field of an image displayed by the device may be adjusted by adjusting an aperture size by using the motor. If the aperture does not need to be adjusted, the drive voltage of the driver chip that controls the motor may be reduced, and the power consumption of the driver chip may be reduced. This improves the power consumption of the camera module used in the shooting process. For ease of description, a motor that pushes an aperture blade to move is referred to as an aperture motor below.

An embodiment of this application provides a voltage adjustment method. The voltage adjustment method may be used to dynamically adjust, based on a position to which the lens moves, the drive voltage of the driver chip that controls the focus motor. During specific implementation, after a camera is started, the camera captures an image. In a focusing process, a target position of a lens is obtained, and a drive voltage of a driver chip is determined based on the target position, so that the driver chip further controls, under driving of the drive voltage, a focus motor to push the lens to reach the target position, to adjust image definition.

When a pushing force required for moving the lens to the target position is smaller, the drive voltage is lower. When the pushing force required for moving the lens to the target position is larger, the drive voltage is higher. In this way, a magnitude of the drive voltage of the driver chip is dynamically adjusted based on the position to which the lens moves, to prevent the drive voltage of the driver chip from being always a high voltage. This improves power consumption in an operating process of the camera module.

In addition, an embodiment of this application further provides a voltage adjustment method. The voltage adjustment method may be used to dynamically adjust, based on whether an aperture size changes, a drive voltage of a driver chip that controls an aperture motor. During specific implementation, after a camera is started, the camera captures an image, and the drive voltage of the driver chip is a low voltage by default. Before aperture adjustment, the drive voltage of the driver chip is first adjusted to a high voltage, and then, under driving of the high voltage, an aperture motor is controlled to change a diameter size of an aperture, to adjust an f-number of the aperture to a target f-number and obtain an image captured by the camera with an adjusted f-number, and finally, the drive voltage of the driver chip is adjusted to a low voltage.

The target f-number may be an f-number set when a user manually adjusts the aperture, or an f-number obtained through calculation by using an automatic exposure algorithm when an electronic device starts an automatic exposure function. For specific determining of the target f-number, refer to subsequent detailed content. Details are not described herein.

It can be learned that, the drive voltage of the driver chip of the aperture motor is a low voltage by default, and the drive voltage of the driver chip is temporarily adjusted to a high voltage only when the aperture needs to be adjusted, to prevent the drive voltage of the driver chip from being always a high voltage. This improves power consumption in an operating process of the camera module.

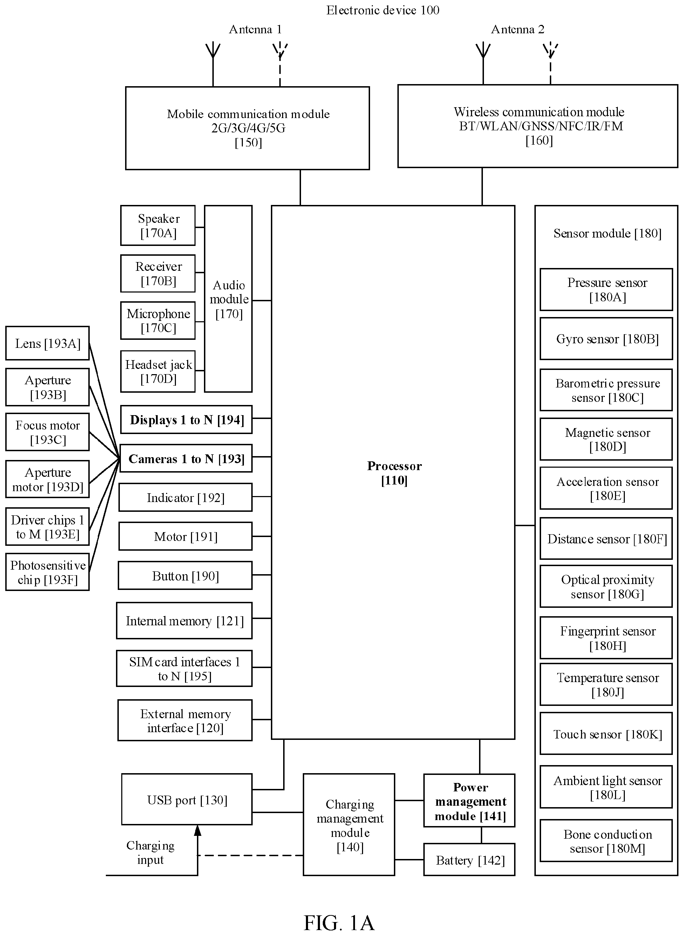

FIG. 1A is a diagram of a hardware structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), augmented reality (augmented reality, AR) device, virtual reality (virtual reality, VR) device, artificial intelligence (artificial intelligence, AI) device, wearable device, in-vehicle device, smart home device, and/or smart city device, a specific type of the electronic device is not limited in the embodiment of this application.

The electronic device 100 may include a processor 110, an external memory interface 120, an internal memory 121, a universal serial bus (universal serial bus, USB) port 130, a charging management module 140, a power management module (Power Management Unit, PMU) 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some implementations, the processor 110 may calculate definition of an image captured by the camera 193, and calculate, by using an automatic focusing algorithm, a parameter input to a driver chip 193E of a focus motor 193C, for example, a code value, or calculate, based on a position of a lens input by a user, a parameter corresponding to the position of the lens. The parameter may be used to control a magnitude of a current output by the driver chip 193E to the focus motor 193C, so that the focus motor 193C can generate, based on currents of different magnitudes, pushing forces of different magnitudes to push the lens 193A, to move the lens 193A to different positions, and further adjust the definition of the image captured by the camera 193. For example, the processor 110 may specifically calculate the image definition by using the ISP, to determine the parameter. For specific descriptions of the focus motor 193C and the driver chip 193E, refer to subsequent content. Details are not described herein again.

In some embodiments, the processor 110 may calculate brightness of the image captured by the camera 193, and determine a target f-number by using an automatic exposure algorithm, or obtain a target f-number set by the user, and calculate a parameter, for example, a code value, that is input to the driver chip 193E of an aperture motor 193D. The parameter may be used to control a magnitude of a current output by the driver chip 193E to the aperture motor 193D, so that the aperture motor 193D can generate, based on currents of different magnitudes, pushing forces of different magnitudes to push a blade of an aperture 193B, to adjust an f-number of the aperture 193B to the target f-number. Further, after the f-number is adjusted to the target f-number, the image brightness reaches a threshold, and automatic exposure of the camera 193 is implemented. For example, the processor 110 may specifically calculate the image brightness by using the ISP, to determine the parameter. For specific descriptions of the aperture motor 193D and the driver chip 193E, refer to subsequent content. Details are not described herein again.

The charging management module 140 is configured to receive a charging input from a charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

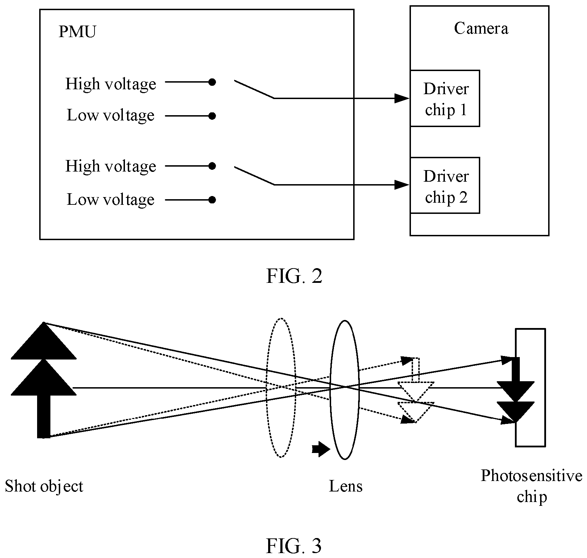

In some embodiments, the power management module 141 may be configured to supply power to one or more components in the camera 193. Specifically, the power management module 141 may supply power to the driver chip 193E of the focus motor 193C or the driver chip 193E of the aperture motor 193D in the camera 193. For the driver chip 193E of the focus motor 193C or driver chip 193E of the aperture motor 193D, the power management module 141 may provide two or more voltage output pins, and different pins may be configured to provide voltages of different magnitudes. The driver chip 193E may be switched to connect different voltage output pins based on a drive voltage required by the driver chip 193E, to dynamically adjust a drive voltage of the driver chip 193E. Specifically, a magnitude of a drive voltage of the driver chip 193E of the focus motor 193C may be controlled based on a position to which the lens 193A moves, and a magnitude of a drive voltage of the driver chip 193E of the aperture motor 193D may be controlled based on whether an aperture size changes. For a specific connection relationship between the power management module 141 and both the driver chip 193E of the focus motor 193C and the driver chip 193E of the aperture motor 193D, refer to related descriptions in FIG. 2. Details are not described herein again.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like.

In some embodiments, the display 194 may be configured to display an image captured by the camera 193 in real time.

The electronic device 100 may implement a shooting function through the camera 193, the ISP, the video codec, the GPU, the display 194, the application processor and the like.

The ISP is configured to process data fed back by the camera 193. For example, during shooting, a shutter is pressed, and light is transmitted to a photosensitive chip of the camera through a lens. An optical signal is converted into an electrical signal, and the photosensitive chip of the camera transmits the electrical signal to the ISP for processing, to convert the electrical signal into a visible image. The ISP may further perform algorithm optimization on noise and image brightness. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive chip. In some embodiments, the electronic device 100 may include one or N cameras 193, where N is a positive integer greater than 1.

Specifically, for one camera 193, the camera 193 may include components such as a lens 193A, an aperture 193B, a focus motor 193C, an aperture motor 193D, a driver chip 193E, and a photosensitive chip 193F. In this embodiment of this application, the camera includes a plurality of components, and the camera may also be referred to as a camera module.

The lens 193A may change a propagation direction of light, and converge reflected light of a shot object on the photosensitive chip 193F. In addition, a change in the position of the lens 193A may change definition of the image captured by the camera 193.

The aperture 193B includes a plurality of aperture blades. A diameter size of the aperture 193B may be changed by moving positions of the aperture blades, to change an amount of light of the reflected light of the shot object that passes through the lens 193A and that converges on the photosensitive chip 193F, that is, to change an amount of incident light, and further change display effect such as brightness or a depth of field of an image. Different diameter sizes of the aperture 193B correspond to different f-numbers. A larger diameter size of the aperture 193B indicates a smaller f-number, a larger amount of incident light, higher image brightness, and a shallower depth of field (a blurrier background) of the image. A smaller diameter size of the aperture 193B indicates a larger f-number, a smaller amount of incident light, lower image brightness, and a deeper depth of field (a clearer background) of the image.

The focus motor 193C is configured to push the lens 193A to move, to change a distance between the lens 193A and the photosensitive chip 193F and further change the definition of the image captured by the camera 193. Specifically, the focus motor 193C may convert electric energy, electromagnetic energy, and the like into mechanical energy, to drive the lens 193A to move. For example, the focus motor 193C may be a motor of a type like a voice coil motor, an ultrasonic motor, a stepper motor, or a memory alloy motor. For example, the voice coil motor may drive, by controlling a current, a spring plate or a spring to operate, to further adjust the position of the lens 193A, so that an image of the shot object is clear.

The aperture motor 193D is configured to push the aperture blades of the aperture 193B to move, to change the diameter size of the aperture 193B, and further change the brightness or the depth of field of the image captured by the camera 193.

The driver chip 193E is configured to transmit a current to the one or more components in the camera 193, to control driving of the one or more components. The driver chip 193E may control a magnitude of the transmitted current based on an obtained code value. In some embodiments, the camera 193 may include one or M driver chips 193E, and M is a positive integer greater than 1. For example, the driver chip 193E may include the driver chip of the focus motor 193C and the driver chip of the aperture motor 193D. The driver chip of the focus motor 193C is configured to drive the focus motor 193C, to control the focus motor 193C to move the lens 193A to a target position. The driver chip of the aperture motor 193D is configured to drive the aperture motor 193D, to control the aperture motor 193D to adjust the f-number of the aperture 193B to the target f-number.

In addition, the driver chip 193E may control driving of the focus motor 193C and the aperture motor 193D under a dynamically changing drive voltage provided by the power management module 141. The driver chip of the focus motor 193C may determine, based on the position to which the lens 193 A moves, a drive voltage required by the driver chip. When a pushing force required for moving the lens 193A to the target position is smaller, a drive voltage required by the driver chip 193E is lower. When a pushing force required for moving the lens 193A to the target position is larger, a drive voltage required by the driver chip 193E is higher. The driver chip of the aperture motor 193D may determine, based on whether the aperture 193B is adjusted, the drive voltage required by the driver chip. A drive voltage required by the driver chip of the aperture motor 193D in a process of adjusting the aperture 193B is higher than a drive voltage required when the aperture 193B is not adjusted.

For a specific process in which the power management module 141 provides the dynamically changing drive voltage for the driver chip 193E of the focus motor 193C and the driver chip 193E of the aperture motor 193D, refer to related descriptions in FIG. 2. Details are not described herein again.

The photosensitive chip 193F may be a charge coupled device (charge coupled device, CCD) or a complementary metal-oxide-semiconductor (complementary metal-oxide-semiconductor, CMOS) phototransistor. The photosensitive chip 193F may convert an optical signal into an electrical signal, and then transfer the electrical signal to the ISP to convert the electrical signal into a digital image signal. The ISP outputs the digital image signal to the DSP for processing. The DSP converts the digital image signal into an image signal in a standard format such as RGB or YUV.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The internal memory 121 may include one or more random access memories (random access memories, RAMs) and one or more non-volatile memories (non-volatile memories, NVMs).

In some embodiments, the internal memory 121 may be configured to store an automatic focusing algorithm, an automatic exposure algorithm, and the like. The automatic focusing algorithm may be used to automatically adjust the definition of the image captured by the camera 193, so that the definition of the image captured by the camera 193 meets a requirement. The automatic exposure algorithm may be used to automatically adjust the brightness of the image captured by the camera 193, so that the brightness of the image captured by the camera 193 is equal to the threshold. In addition, the internal memory 121 may be further configured to store a mapping table, for example, a mapping table of a target position to which the motor moves and a target voltage. The electronic device 100 may determine, based on the mapping table, a target voltage required by the driver chip of the focus motor 193C when the current lens 193A moves to the target position, for example, a mapping table of an f-number and a position of the aperture blade. The electronic device 100 may determine, based on the mapping table, a target position to which an aperture blade needs to move corresponding to an aperture size to be adjusted currently. For details about the mapping table stored in the internal memory 121, refer to subsequent content. Details are not described herein again.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100.

The headset jack 170D is configured to connect to a wired headset.

The pressure sensor 180A is configured to sense a pressure signal, and can convert the pressure signal into an electrical signal.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during shooting. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The optical proximity sensor 180G may include, for example, a light emitting diode (LED) and an optical detector, for example, a photodiode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during shooting.

The fingerprint sensor 180H is configured to capture a fingerprint. The electronic device 100 may use a feature of the captured fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event.

The bone conduction sensor 180M may obtain a vibration signal.

The button 190 includes a power button, a volume button, and the like. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100.

The electronic device may be a portable terminal device carrying iOS, Android, Microsoft, or another operating system, for example, a mobile phone, a tablet computer, or a wearable device; or may be a non-portable terminal device such as a laptop (Laptop) having a touch-sensitive surface or a touch panel, or a desktop computer having a touch-sensitive surface or a touch panel. A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

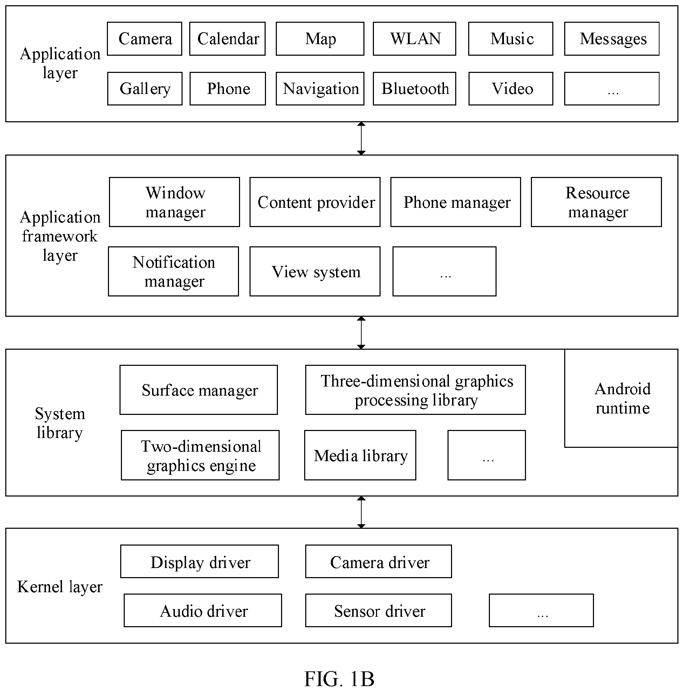

FIG. 1B is a block diagram of a software structure of an electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 1B, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 1B, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of an operating process of software and hardware of the electronic device 100 with reference to a capturing and shooting scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, to start the camera application. Further, the camera driver is started by invoking the kernel layer, and a static image or a video is captured by using the camera 193.

FIG. 2 is a diagram of a structure of a voltage adjustment apparatus according to an embodiment of this application.

As shown in FIG. 2, the voltage adjustment apparatus may include a PMU, a driver chip 1, and a driver chip 2.

The PMU may be configured to supply power to the driver chip 1 and the driver chip 2.

The driver chip 1 may be the foregoing driver chip of the focus motor. The driver chip may control, under driving of a drive voltage provided by the PMU, the focus motor to move a lens, to change image definition. In addition, the driver chip 1 may further obtain a code value, control, based on the code value, a magnitude of a current transmitted to the focus motor, determine the drive voltage based on the code value, and notify the PMU of the drive voltage required by the driver chip 1, so that the PMU dynamically adjusts the drive voltage of the driver chip 1.

The driver chip 2 may be the foregoing driver chip of the aperture motor. The driver chip may control, under driving of a drive voltage provided by the PMU, the aperture motor to change an aperture size, to further change brightness or a depth of field of an image. In addition, the driver chip 2 may further determine the drive voltage based on whether the aperture size needs to be adjusted, and notify the PMU of the drive voltage required by the driver chip 2, so that the PMU dynamically adjusts the drive voltage of the driver chip 2.

For specific descriptions of the PMU, the driver chip 1, and the driver chip 2, refer to related content of the power management module 141 and the driver chip 193E in FIG. 1A. Details are not described herein again.

Specifically, the PMU may provide a plurality of power output pins for the driver chip 1. Different output pins may be configured to output different voltages, for example, a first voltage, a second voltage, and a third voltage. The PMU may obtain a voltage required by the driver chip 1, select different power output pins for the driver chip 1, and provide different drive voltages for the driver chip 1.

For example, as shown in FIG. 2, the PMU may provide two power output pins for the driver chip 1. One output pin is configured to output a high voltage, for example, 3.2 V, and the other output pin is configured to output a low voltage, for example, 1.86 V. For example, the driver chip 1 may be connected, by default, to a high voltage output pin provided by the PMU.

Similarly, the PMU may provide a plurality of power output pins for the driver chip 2. Different output pins may be configured to output different voltages, for example, a first voltage, a second voltage, and a third voltage. The PMU may obtain a voltage required by the driver chip 2, select different power output pins for the driver chip 2, and provide different drive voltages for the driver chip 2.

For example, as shown in FIG. 2, the PMU may provide two power output pins for the driver chip 2. One output pin is configured to output a high voltage, for example, 3.2 V, and the other output pin is configured to output a low voltage, for example, 1.86 V. For example, the driver chip 2 may be connected, by default, to a low voltage output pin provided by the PMU.

It should be understood that the PMU may further provide more or fewer power output pins. For example, the PMU may provide three power output pins for the driver chip 1, including a high voltage output pin, a medium voltage output pin, and a low voltage output pin. For example, the three power output pins may be respectively configured to output voltages of 3.2 V, 2.5 V, and 1.86 V. For another example, the PMU may provide only one power output pin for the driver chip 2. The power output pin may output a dynamically changing voltage. When the driver chip 2 requires a high voltage, the power output pin outputs 3.2 V. When the driver chip 2 requires a low voltage, the power output pin adjusts the output voltage to 1.86 V. The foregoing high voltage and low voltage are merely used to indicate compared voltage levels of the two voltages, and are not used to limit values of the voltages. The following high voltage and low voltage are similar, and details are not described below again.

In addition, FIG. 2 shows that the driver chip 1 and the driver chip 2 may be integrated into one chip in a camera module. It should be understood that the driver chip 1 and the driver chip 2 are independent of each other. Physical positions of the driver chip 1 and the driver chip 2 are not limited in this embodiment of this application. In addition, the voltage adjustment apparatus may be configured to dynamically adjust only the drive voltage of the driver chip 1. In this case, the voltage adjustment apparatus does not include the driver chip 2, and the PMU provides a plurality of voltage output pins for the driver chip 2, or provides an unchanged drive voltage only for the driver chip 2. Alternatively, the voltage adjustment apparatus may be configured to dynamically adjust only the drive voltage of the driver chip 2. In this case, the PMU does not include the driver chip 1, and provides a plurality of voltage output pins for the driver chip 1, or provides an unchanged drive voltage only for the driver chip 1.

FIG. 2 is merely an example, and does not constitute a limitation on this embodiment of this application. The voltage adjustment apparatus may further include more or fewer components. For example, the voltage adjustment apparatus may further include another component in the camera module, for example, a focus motor or an aperture motor.

According to a voltage adjustment method provided in embodiments of this application, a drive voltage of a component in the camera module can be dynamically adjusted based on an operating status of the component, to prevent the drive voltage of the component from always keeping a high voltage unchanged, further reducing power consumption of the camera module.

The following separately describes, by using two embodiments, detailed processes of dynamically adjusting drive voltages of different camera components.

### Embodiment (1)

FIG. 3 is a diagram related to focusing according to an embodiment of this application.

It can be learned from FIG. 3 that, according to a pinhole imaging principle, reflected light of a shot object passes through a lens in a camera, reaches a photosensitive chip for imaging, and is further presented as an image that can be viewed by a user on a device. Focusing means adjusting positions of one or more lenses in the lens, to allow an image plane of the shot object to fall on an imaging surface of the photosensitive chip, so that imaging of the shot object is clear. Further, when the shot object includes objects that are at different distances from the lens in space, focusing may further enable a focal point to focus on a subject of the shot object, and allow an image plane of the subject of the shot object to fall on the imaging surface of the photosensitive chip, so that the subject part of the shot object is clearly imaged, that is, a distant object in an image is clear, or a near object in the image is clear.

The lens may be moved by applying a pushing force to the lens by using a focus motor, to change image definition. Because the focus motor is driven by a driver chip, according to the voltage adjustment method provided in embodiments of this application, a drive voltage of the driver chip of the focus motor can be dynamically adjusted based on a target position to which the lens needs to move. For example, a larger pushing force required for the lens to reach the target position indicates a higher drive voltage, and a smaller pushing force required for the lens to reach the target position indicates a lower drive voltage.

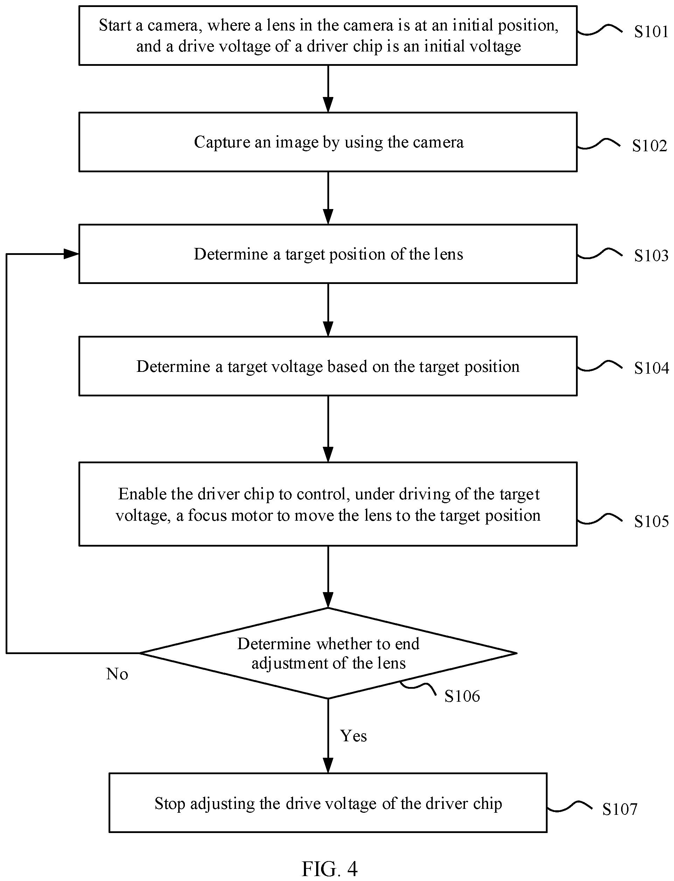

FIG. 4 is a schematic flowchart of a voltage adjustment method according to an embodiment of this application.

As shown in FIG. 4, the method includes the following steps.

S101: An electronic device 100 starts a camera, where a lens in the camera is in an initial position, and a drive voltage of a driver chip is an initial voltage.

The camera of the electronic device 100 may include components such as a lens, a focus motor, the driver chip of the focus motor, and a photosensitive chip. The driver chip of the focus motor may drive the focus motor, and control the focus motor to generate a pushing force to move the lens, to further change a distance between the lens and the photosensitive chip, and change definition of an image captured by the camera. For specific descriptions of the lens, the focus motor, the driver chip of the focus motor, and the photosensitive chip, refer to the related content of the lens 193A, the focus motor 193C, the driver chip 193E, and the photosensitive chip 193F in FIG. 1A. Details are not described herein again.

The electronic device 100 may start the camera in the following two cases:
(1) The electronic device 100 may start the camera when a shooting function is started.

The shooting function may be a photographing or video recording function included in a camera application, or a related function included in another application that can trigger shooting, for example, an image recognition function, a code scanning function, or a video call function.

For example, the electronic device 100 may start the camera after detecting a user operation of tapping a camera icon displayed on a home screen. Alternatively, the electronic device 100 may start the camera after detecting a voice instruction of the user for starting the camera application. Alternatively, the electronic device 100 may start the camera after detecting a user operation of starting a video call function of a chat application.

In addition, when the electronic device 100 includes a plurality of cameras, for example, a standard camera, a long-focus camera, and a wide-angle camera, or a front-facing camera and a rear-facing camera, the started camera may be a camera preset for the shooting function. For example, when starting the video call function, the electronic device starts the camera, and the camera may be a front-facing camera.

(2) The electronic device 100 may start one of a plurality of cameras when switching the camera.

When the electronic device 100 includes the plurality of cameras, the electronic device 100 may start one of the plurality of cameras when switching the camera.

For example, when detecting that a user switches the camera, for example, switches a front-facing camera to a rear-facing camera, the electronic device 100 may start the rear-facing camera. Alternatively, when different cameras are used in different shooting modes, the electronic device 100 may start a camera used in a target shooting mode when detecting that the user switches to the target shooting mode. Alternatively, when detecting that the user changes a zoom ratio, the electronic device 100 may start a camera corresponding to a target zoom ratio adjusted by the user.

It should be understood that an occasion at which the electronic device 100 starts the camera is not limited in this embodiment of this application.

After the camera is started, the lens in the camera is in the initial position, and the drive voltage of the driver chip of the focus motor is the initial voltage. The initial position may be a preset position. For example, the initial position may be a farthest end or a central point of a range within which the lens can move. The initial voltage may also be a preset voltage, for example, 3.2 V. It should be understood that the initial voltage can ensure that the lens can be at the initial position after the camera is started. If the initial position of the lens can be implemented only by applying a large force by the focus motor, the initial voltage needs to be a high voltage. If the initial position of the lens can be implemented only by applying a small force by the focus motor, the initial voltage may be a high voltage and a low voltage. Therefore, preferably, the initial voltage is a high voltage, to ensure that the lens can be moved to the initial position regardless of a specific force the focus motor needs to apply. The initial position and the initial voltage are not limited in this embodiment of this application.

In this embodiment of this application, the initial position may also be referred to as a fourth position, and the initial voltage may also be referred to as a fourth drive voltage.

S102: The electronic device 100 captures an image by using the camera.

The image is specifically an image obtained in a process in which reflected light of a shot object passes through the lens in the camera, is imaged on a photosensitive chip, and is further processed by another component, for example, an ISP, including linear correction, noise removal, point patching, color interpolation, white balance correction, and the like.

It should be understood that the electronic device 100 continuously captures an image by using the camera in a process in which the electronic device 100 uses the camera. In a focusing process, the electronic device 100 also always keeps capturing an image by using the camera. In other words, in the focusing process, the image captured by the electronic device 100 by using the camera includes images captured when the lens is at different positions.

In addition, after the electronic device 100 starts the camera, the electronic device 100 may display, in a user interface, for example, a preview interface, or a viewfinder, an image captured by the camera in real time.

S103: The electronic device 100 determines a target position of the lens.

The electronic device 100 may trigger determining the target position of the lens when focusing is started. Focusing includes manual focusing and automatic focusing. Manual focusing means that the user manually adjusts a position of the lens, so that a clear picture of the shot object is presented in the image. Automatic focusing means that the electronic device 100 automatically adjusts the position of the lens, so that a clear picture of the shot object is presented in the image.

For an electronic device 100 that supports manual focusing, the electronic device 100 may include a focus ring. The electronic device 100 may detect a user operation on the focus ring, trigger manual focusing, and determine, based on a rotational amplitude of the focus ring by the user, a target position of a lens adjusted by the user.

For an electronic device 100 that supports automatic focusing, the electronic device 100 may trigger automatic focusing in the following three cases:
(1) Trigger automatic focusing after starting the camera

The electronic device 100 may trigger starting the camera when the shooting function is started or the camera is switched. In other words, after starting the shooting function, the electronic device 100 may trigger automatic adjustment of definition of an image captured by a currently started camera, to complete automatic focusing. Alternatively, after switching the camera, the electronic device 100 may adjust definition of an image captured by a currently switched camera, to complete automatic focusing.

For specific descriptions of an occasion at which the electronic device 100 starts the camera, refer to the related content in step S101. Details are not described herein again.

(2) Trigger automatic focusing of an image when a distance between the shot object and the camera changes

According to a pinhole imaging principle, if the distance between the shot object and the camera changes, an imaging result of the image changes, and the image becomes blurry. Therefore, the electronic device 100 may trigger automatic focusing when the distance between the shot object and the lens changes.

The electronic device 100 may calculate the image definition, and determine, based on a change in the image definition, whether the distance between the shot object and the camera changes. Alternatively, the electronic device 100 may detect the distance between the shot object and the camera by using a sensor like an infrared sensor or a distance sensor, to determine whether the distance between the shot object and the camera changes.

(3) Trigger automatic focusing of an image when a focal point changes

The focal point may be presented as a point in a preview interface or a viewfinder in a shooting process. A picture in which the point and a surrounding area of the point are located is present with highest definition. In an image displayed in the preview interface or the viewfinder, a position of the focal point is a position of a shot subject. The focal point can be changed, to change the shot subject and a clearest area in the image. For example, when the shot object includes a person in a foreground and a landscape in a background, if the person is used as the shot subject, the person is used as the focal point in the image, and the person is the clearest in the image after focusing; or if the landscape is used as the shot subject, the landscape is used as the focal point in the image, and the landscape is the clearest in the image after focusing.

In some implementations, the focal point of the electronic device 100 in the focusing process may be a central point in the preview interface or the viewfinder, or one or more points near the central point.

For example, when detecting that the user changes the focal point, for example, an operation of tapping a specific point in the preview interface of the image, the electronic device 100 may use a position in which the tap operation is performed as a focal point to be changed by the user, trigger automatic focusing of the image, and adjust, by moving the lens, a picture area on which the tap operation is performed by the user to a clearest state.

It may be understood that occasions at which the electronic device 100 starts automatic focusing are not limited to the foregoing three types. This is not limited in this embodiment of this application.

In an automatic focusing process, the electronic device 100 may determine the target position of the lens by using an automatic focusing algorithm.

A principle of automatic focusing is to continuously adjust a distance between the lens and the photosensitive chip, analyze image definition obtained by adjusting the lens in different positions, and gradually adjust the lens to an appropriate position, to obtain an image whose definition meets a requirement, completing focusing of the image. That the image definition meets the requirement may mean that the image definition reaches a peak value or definition of the subject of the shot object in the image reaches a peak value. Therefore, in the automatic focusing process, the electronic device 100 needs to determine a position of the lens a plurality of times, obtain images when the lens is at the different positions, and dynamically adjust the voltage of the driver chip in a process of moving the lens, that is, repeatedly perform steps S103 to S106 until the electronic device 100 finds a position of the lens when the image definition meets the requirement. For detailed descriptions of subsequent steps, refer to subsequent content.

In the automatic focusing algorithm, the position of the lens may be adjusted by using a hill climbing search method, a contrast focusing method, a golden search method, or the like, to find the position of the lens when the definition meets the requirement. The contrast focusing method is used as an example. The electronic device 100 may traverse values from one end of a movable range of the lens to the other end, sequentially move the lens to each traversed position, calculate definition of an image captured when the lens is at each position, find a point with highest definition, and finally return to a position of the lens when the definition is the highest, to implement automatic focusing. Alternatively, the hill climbing search method is used as an example. In the process of moving the lens, the electronic device 100 may determine a target position of next movement by comparing definition of an image captured when the lens is at a previous movement position. For example, when definition of an image captured when the lens in a position A is lower than that captured when the lens in a position B, a next target position is set to a value of a position close to the position B and away from the position A. When definition of an image captured when the lens in a position A is higher than that captured when the lens in a position B, the next target position is set to a value in a position away from the position B and close to the position A until the lens gradually approaches and reaches a position of the lens when definition is the highest.

The image definition means a sharpness degree of a change in image details. At an edge of the image details, a sharper (faster) and more dramatic (higher contrast) change in optical density or brightness indicates a clearer edge of the image details, higher distinguishability, and higher image definition. For example, the electronic device 100 may analyze the image definition by using an algorithm, for example, a frequency domain function, a grayscale function, an information entropy function, or a statistical function.

In a process in which the electronic device 100 determines the target position, the electronic device 100 may determine one parameter indicating the target position of the lens, for example, a code value. When controlling the lens to move, the electronic device 100 may control, by using the code value, a current value output by the driver chip to the focus motor. One code value corresponds to one current value. The driver chip may identify, based on the code value, a current output to the focus motor. The focus motor may generate pushing forces of different magnitudes under actions of different currents to push the lens, to move the lens to different positions. For example, it is assumed that code values corresponding to all positions in which the lens can move include 1024 values from 0 to 1023. According to the contrast focusing method, in a process in which the electronic device 100 repeatedly adjusts the position of the lens, that is, in a process in which steps S103 to S106 are performed, when determining the target position, the electronic device 100 determines that code values sequentially includes: code values that increase from 0 to 1023 or reduce from 1023 to 0, and a returned code value corresponding to a point with the highest image definition.

S104: The electronic device 100 determines a target voltage based on the target position.

The focus motor changes the position of the lens by applying a pushing force to the lens. When the lens needs to be moved to the different positions, pushing forces to be applied by the focus motor are also different. In this case, a drive voltage of the driver chip that drives the focus motor may be determined based on a magnitude of a pushing force required by the focus motor. A larger pushing force indicates a higher the drive voltage. A smaller pushing force indicates a lower drive voltage. In other words, when a pushing force required when the lens moves to a first position is larger than a pushing force required when the lens moves to a second position, a target voltage occurring when the target position is the first position is higher than a target voltage occurring when the target position is the second position.

During specific implementation, a mapping relationship between the position of the lens and the voltage may be preset by the electronic device 100. The mapping relationship indicates drive voltages required by the driver chip when the lens moves to the different positions. For example, it is assumed that a mapping relationship between a first voltage and a position of the lens within a first range and a mapping relationship between a second voltage and a position of the lens within a second range are preset in the electronic device 100. The first voltage is a drive voltage required by the driver chip when the lens moves to the first range, and the second voltage is a drive voltage required by the driver chip when the lens moves to the second range. If a pushing force applied when the lens moves to the first range is larger than a pushing force applied when the lens moves to the second range, the first voltage is higher than the second voltage; or if a pushing force applied when the lens moves to the first range is less than a pushing force applied when the lens moves to the second range, the first voltage is lower than the second voltage. In this case, when the target position is within the first range, the target voltage is the first voltage; or when the target position is within the second range, the target voltage is the second voltage.

The mapping relationship between the position of the lens and the voltage may be obtained by a developer by applying different drive voltages to the driver chip to test movement distances of the lens in a focusing test experiment. The developer may preset the mapping relationship between the position of the lens and the voltage in the electronic device 100.

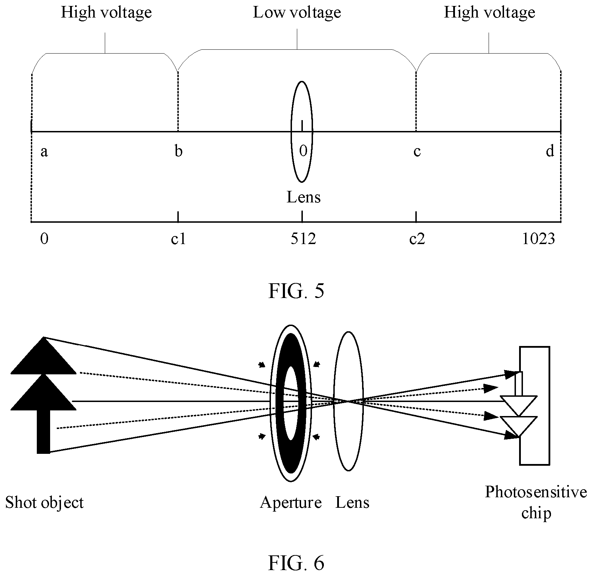

For example, the focus motor is a voice coil motor. FIG. 5 is a diagram of an example of the mapping relationship between the position of the lens and the voltage.

The voice coil motor drives, by using a current, a spring plate or a spring to operate, to control the lens to move in two opposite directions. When the lens is at a starting point, a pushing force applied by the voice coil motor is the smallest. A longer distance from a position in which the lens moves toward any side of the starting point to the starting point indicates a larger pushing force applied by the voice coil motor, and a higher drive voltage required by the driver chip.

As shown in FIG. 5, the lens may move within a range (a, d), and a point 0 is a central point of the movable range (a, d) of the lens, and is also the starting point of the lens. A code value corresponding to the point 0 is 512, that is, when a code value received by the driver chip of the aperture motor is 512, the driver chip may control the aperture motor to move the lens to the point 0. Similarly, a code value corresponding to a point a is 0, a code value corresponding to a point b is c1, a code value corresponding to a point c is c2, and a code value corresponding to a point d is 1023.

It can be learned from FIG. 5 that, when the target position of the lens is within a range (b, c), the target voltage is a low voltage; and when the target position of the lens is within a range (a, b) or a range (c, d), the target voltage is a high voltage. In other words, when the target position of the lens is farther away from the starting point of the lens, the target voltage is higher; or when the target position of the lens is closer to the starting point of the lens, the target voltage is lower.

It should be understood that FIG. 5 is merely an example. The code value indicating the position of the lens and the mapping relationship between the position of the lens and the voltage do not constitute a limitation on this embodiment of this application. More voltage levels may be further obtained through division within the movable range of the lens, that is, more mapping relationships between the position of the lens and the voltage are included. For example, the first range of the position of the lens corresponds to a voltage A, the second range corresponds to a voltage B, and a third range corresponds to a voltage C.

In other words, the electronic device 100 may dynamically adjust the drive voltage of the driver chip based on the position to which the lens moves. For example, when the target position of the lens is the first position, the drive voltage of the driver chip is a first drive voltage. When the target position of the lens is the second position, the drive voltage of the driver chip is a second drive voltage. The first drive voltage is different from the second drive voltage, and the first position is different from the second position. Further, when the focus motor needs a larger pushing force to move the lens to the first position, that is, the first position is farther from a position (for example, a third position) before the lens is not moved than the second position, the first drive voltage is higher than the second drive voltage.

In some embodiments, mapping relationships between positions of the lens and voltages may be different when postures of the electronic device 100 are different, because when the electronic device 100 has different postures, the lens moves in different directions, pushing forces applied by the focus motor to the lens are also different, and the drive voltage of the driver chip is further affected. When a movement direction of the lens is more horizontal than vertical, a pushing force required for moving the lens to the target position is smaller, and a drive voltage of the driver chip is lower. When a movement direction of the lens is more vertical than horizontal, a pushing force required for moving the lens to the target position is larger, and a drive voltage of the driver chip is higher.

To be specific, when a plane of the lens is perpendicular to the ground, the lens moves in a horizontal direction in the focusing process. When a plane of the lens is parallel to the ground, the lens moves up and down in a vertical direction in the focusing process. Because movement of the focus motor of the lens is affected by factors such as gravity and inertia to some extent, a pushing force applied by the focus motor when the lens moves in the horizontal direction is less than that applied when the lens moves in the vertical direction. In other words, it is easier for the focus motor to push the lens horizontally than vertically.

Therefore, when the postures of the electronic device 100 are different, target voltages corresponding to a same target position may be different. In other words, when the electronic device 100 has the different postures, the electronic device 100 may have different mapping tables of the position of the lens and the voltage. As shown in the diagram of the mapping relationship between the position of the lens and the voltage in FIG. 5, when the lens moves in the horizontal direction compared with when the lens moves in the vertical direction, a lens range corresponding to a low voltage is wider, and a lens range corresponding to a high voltage is narrower; or when the lens moves in the horizontal direction compared with when the lens moves in the vertical direction, a voltage of a position of the lens at any point in (a, d) is lower than a corresponding voltage of a position of the lens at the point.

In other words, when the postures of the electronic device 100 are different and target positions of the lens are the same position, drive voltages of the driver chip may be different. The posture of the electronic device 100 may be an included angle between the plane of the lens and a horizontal plane. When the included angle between the plane of the lens and the horizontal plane is larger, the lens more tends to move in the horizontal direction, a drive voltage of the driver chip is lower when the target positions of the lens are the same position.

During specific implementation, the electronic device 100 may first determine the posture of the electronic device 100 before determining the target voltage based on the target position. For example, the electronic device 100 may determine the posture of the electronic device 100 by using an acceleration sensor, a gyro sensor, or the like. Then, the mapping relationship between the position of the lens and the voltage is adjusted based on the posture of the electronic device 100, and the target voltage is determined based on an adjusted mapping relationship and the target position.

S105: The electronic device 100 enables the driver chip to control, under driving of the target voltage, the focus motor to move the lens to the target position.

Specifically, in a process in which the electronic device 100 controls, by using the driver chip, the focus motor to move the lens, the driver chip may output, under driving of the target voltage, a corresponding current to the focus motor based on a parameter specified by the electronic device 100, for example, the code value. The focus motor generates a pushing force under an action of the specific current to push the lens, to move the lens to a specific position. In addition, in a closed-loop operating mode, the electronic device 100 may further reversely adjust, based on the position to which the lens moves, the pushing force generated by the focus motor, that is, adjust a magnitude of a current applied by the drive voltage to the focus motor, so that the lens moves precisely and keeps in the target position.

In some implementations, before the electronic device 100 moves the lens, the electronic device 100 may determine, based on whether the target voltage is the same as a current drive voltage of the driver chip, whether the drive voltage of the driver chip needs to be adjusted. If the target voltage is the same as the current drive voltage of the driver chip, the drive voltage of the driver chip does not need to be adjusted; or if the target voltage is different from the current drive voltage of the driver chip, the drive voltage of the driver chip needs to be adjusted to the target voltage.

It should be understood that, if the target voltage is determined for the first time in a current focusing process, the current drive voltage of the driver chip is the initial voltage of the driver chip when the camera is started; or if the target voltage is not determined for the first time, the current drive voltage of the driver chip is a target voltage determined when the lens moves last time.

During specific implementation, when the electronic device 100 needs to adjust the drive voltage of the driver chip, for example, as shown in FIG. 2, the electronic device 100 may change a pin that is of the power management module and that is connected to the driver chip 1, to change a voltage provided by the power management module for the driver chip 1. For example, the drive voltage of the driver chip is adjusted from a high voltage to a low voltage.

Further, in some implementations, when the electronic device 100 adjusts the drive voltage of the driver chip to the target voltage, the electronic device 100 may further change a proportional-integral-differential (Proportional-Integral-Differential, PID) parameter of the driver chip based on the target voltage. The PID parameter is pre-stored in a register of the driver chip, and is a parameter used when the focus motor adjusts the position of the lens based on an error of moving the position of the lens by the focus motor in the closed-loop operating mode. The electronic device 100 may calculate, based on the PID parameter, a position to which the lens is adjusted.

In a process in which the focus motor pushes the lens, due to impact of various factors, such as a load change, a voltage change, and inertia, even if the driver chip provides a specific current for the focus motor to cause the focus motor to generate a pushing force to push the lens, a specific error may exist between a position that the lens reaches and a target position in an ideal state. As a result, an error exists in the position of the lens, or the lens cannot be kept in a stable position.

Therefore, to improve movement precision of the lens, in a process of pushing the lens, the focus motor may operate in the closed-loop mode. In the closed-loop mode, in a process in which the focus motor controls the lens to move, an actual position to which the lens moves under the pushing force applied by the focus motor may be used as a feedback amount, to reversely adjust the pushing force of the focus motor to adjust the position to which the lens moves, so that the lens moves more precisely. For example, the actual position to which the lens moves may be obtained by using a Hall effect sensor. For example, when the lens moves to the position A under an action of a pushing force 1 applied by the focus motor, and the position A exceeds the target position in the ideal state, the driver chip may control the focus motor to reduce the pushing force, and push the lens by using a pushing force 2 less than the pushing force 1, so that the lens moves to the position B. If the position B does not reach the target position in the ideal state, the driver chip may further control the focus motor to increase the pushing force, and push the lens by using a pushing force 3 larger than the pushing force 2. In this case, the lens moves and keeps in the target position in the ideal state.

Specifically, the electronic device 100 may calculate, by using the PID parameter based on an actual position and the target position in the ideal state in a process in which the driver chip fine tunes the pushing force of the focus motor to enable the lens to move to the target position in the ideal state, an adjustment amount delivered to the focus motor during next fine tuning. The PID parameter includes three values: P (proportion), I (integral), and D (differential). The P value is used to cause the lens to quickly reach the target position during movement, the I value is used to eliminate an error between the target position and the actual position, and the D value is used to suppress position oscillation.

It can be learned that the PID parameter may be used to improve lens movement precision in the process in which the driver chip controls the focus motor to move the lens, and increase a speed at which the lens moves to the target position in the automatic focusing process.

Because the PID parameter is related to the drive voltage of the driver chip, when the drive voltage of the driver chip needs to be adjusted, the PID parameter stored in the driver chip also needs to be adjusted synchronously based on the target voltage.

Specifically, the electronic device 100 may determine the PID parameter based on the target voltage and a type of the focus motor. The electronic device 100 may pre-store a mapping table of a voltage, a motor type, and a PID parameter. The electronic device 100 may find, by using the mapping table, a PID parameter corresponding to a current target voltage and a motor type.

For example, Table 1 shows the mapping table of the voltage, the motor type, and the PID parameter.

**Table 1**

| Motor type PID parameter Voltage | Voltage A | Voltage B | ... |
|---|---|---|---|
| Type 1 | PID_A1 | PID_B1 | ... |
| Type 2 | PID_A2 | PID_B2 | ... |
| Type 3 | PID_A3 | PID_B3 | ... |
| ... | ... | ... | ... |

It can be learned from Table 1 that, assuming that the current target voltage is the voltage A, and the motor type of the focus motor is the type 1, it may be determined that the PID parameter is PID_A1. The voltage A and the voltage B may respectively correspond to the foregoing high voltage and low voltage based on magnitudes of the voltages.

It should be understood that Table 1 is merely an example, and does not constitute a limitation on this embodiment of this application. For example, the mapping table may further include more voltage values, and more or fewer motor types. A quantity of voltage values may correspond to a quantity of voltages obtained by dividing the position ranges of the lens. For example, the position ranges of the lens are divided into three voltage levels. The first range corresponds to the voltage A, the second range corresponds to the voltage B, and the third range corresponds to the voltage C. In this case, the mapping table shown in Table 1 should include PID parameters respectively corresponding to the voltages A, B, and C.

It may be understood that, when the focus motor does not operate in the closed-loop mode, there may be no PID parameter in the focus motor, and further, the PID parameter does not need to be synchronously adjusted when the drive voltage of the driver chip needs to be adjusted.

In addition, it should be noted that when capturing the image by using the camera, the electronic device 100 may further display, in real time, the image captured by the camera. In a process in which the electronic device 100 continuously adjusts the position of the lens, the electronic device 100 may display images whose definition changes continuously. The foregoing contrast focusing method is used as an example. In a process in which the electronic device 100 moves the lens from one end of the movable range of the lens to the other end, and returns to the position of the lens when the definition is the highest, the electronic device 100 may display images that change from blurry to clear, and then to blurry, and finally return to clear.

S106: The electronic device 100 determines whether to end adjustment of the position of the lens.

In a manual focusing process, the electronic device 100 may determine, based on whether a user operation of adjusting the position of the lens again is received, whether to end adjustment of the position of the lens. Specifically, after the electronic device 100 adjusts the lens to the target position based on a position of the lens input by the user, if the electronic device 100 receives a position of the lens input by the user again, the electronic device enables, based on the position of the lens input by the user, the driver chip to control, under driving of a drive voltage corresponding to the position of the lens, the focus motor to move the lens to the position of the lens input by the user again, and determines whether to end adjustment of the position of the lens, and so on.

In other words, in the manual focusing process, the electronic device 100 may repeatedly perform steps S103 to S106 sequentially based on a plurality of positions of the lens in a process of successively receiving the plurality of positions of the lens input by the user until the user ends manual focusing.

In the automatic focusing process, the electronic device 100 may determine, based on whether a position of the lens corresponding to the highest image definition is found, whether to end adjustment of the position of the lens. Specifically, when finding the position of the lens corresponding to the highest image definition, the electronic device 100 ends adjusting the position of the lens, to complete this automatic focusing. When failing to find the position of the lens corresponding to the highest image definition, the electronic device 100 continues to adjust the position of the lens, and enables the driver chip to control, under driving of the drive voltage corresponding to the position of the lens, the focus motor to move the lens to the position of the lens until the electronic device 100 finds the position of the lens corresponding to the highest image definition.

In addition, after the electronic device 100 finds the position (for example, the second position) of the lens corresponding to the highest image definition, the electronic device 100 may continuously provide one voltage (for example, the fourth drive voltage) for the driver chip, to cause the driver chip to control the focus motor to keep the lens at the position corresponding to the highest image definition, until the electronic device 100 needs to move the position of the lens again, for example, perform manual focusing or automatic focusing or turn off the camera, and adjust the lens to the starting position. Due to impact of a friction force, the fourth driver chip may be lower than a drive voltage of the driver chip when the focus motor pushes the lens to the position corresponding to the highest definition.

In other words, in the automatic focusing process, the electronic device 100 may continuously adjust the position of the lens to find the position of the lens corresponding to the highest image definition, that is, repeatedly perform steps S103 to S106 until the electronic device 100 finds the position of the lens corresponding to the highest image definition, and ends automatic focusing.

In conclusion, if the electronic device 100 determines not to end adjustment of the lens, the electronic device 100 performs step S103; or if the electronic device 100 determines to end adjusting the position of the lens, the electronic device 100 performs step S107.

S107: The electronic device 100 stops adjusting the drive voltage of the driver chip.

After this focusing is completed, the electronic device 100 may stop adjusting the drive voltage of the driver chip, so that the focus motor keeps a current pushing force applied to the lens, and does not change the position of the lens. In this case, the electronic device 100 may continuously obtain an image captured by the camera when the lens keeps in a current position.

It should be understood that, after focusing is completed, if the image definition changes again, the electronic device 100 may receive a user operation of manual focusing again, and perform steps S103 to S106 again; or the electronic device 100 may repeatedly perform steps S103 to S106, to start automatic focusing of the image, and adjust the image definition until the image definition meets the requirement.

In conclusion, in the focusing process, the electronic device 100 may dynamically adjust the drive voltage of the driver chip based on the target position to which the lens needs to move. When a pushing force required for moving the lens to the target position is smaller, the drive voltage is lower. When a pushing force required for moving the lens to the target position is larger, the drive voltage is higher. This can prevent the drive voltage of the driver chip from keeping always a high voltage, reduce power consumption of the driver chip in the focusing process as much as possible, further improving power consumption of a currently operating camera module, and prolong standby time of the electronic device 100 in a process of using the camera.

### Embodiment (2)

FIG. 6 is a diagram related to aperture adjustment according to an embodiment of this application.

It can be learned from FIG. 6 that, reflected light of a shot object passes through a lens in a camera, reaches a photosensitive chip for and is further presented as an image that can be viewed by a user on a device. Aperture adjustment can change a diameter size of an aperture and an amount of incident light of the lens, to further change display effect of the image, such as brightness and a depth of field of the image. A larger diameter size of the aperture indicates a larger amount of incident light, higher image brightness, and a shallower depth of field (a blurrier background) of the image. A smaller diameter size of the aperture indicates a smaller amount of incident light, lower image brightness, and a deeper depth of field (a clearer background) of the image.

An aperture blade may be driven to move by using an aperture motor, to further change the diameter size of the aperture. According to a voltage adjustment method provided in this embodiment of this application, a drive voltage of a driver chip of the aperture motor can be dynamically adjusted based on whether the aperture needs to be adjusted. When the aperture is adjusted, the drive voltage of the driver chip is higher. When the aperture is not adjusted, the drive voltage of the driver chip is lower.

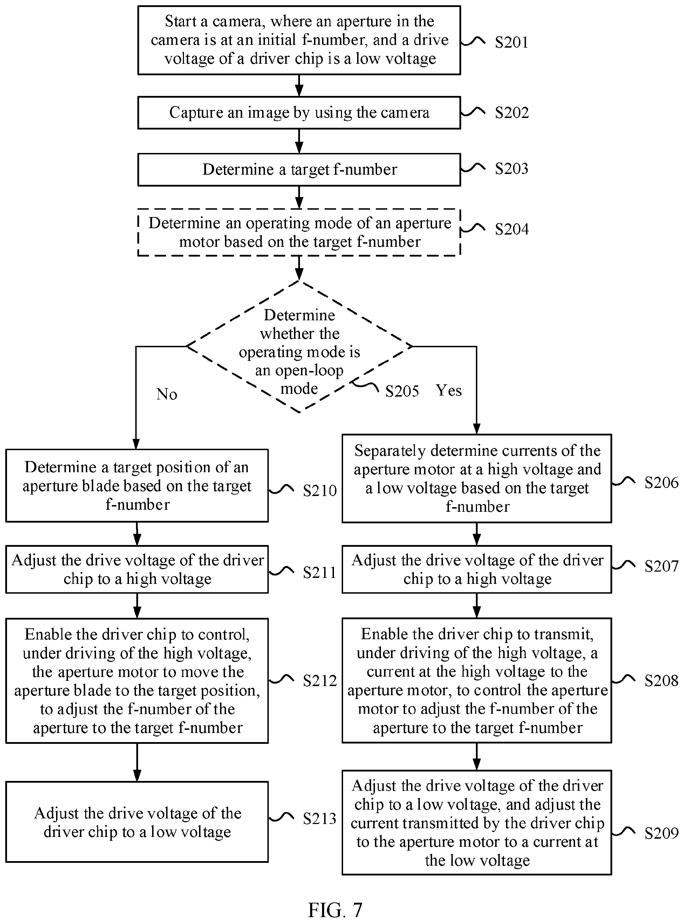

FIG. 7 is a schematic flowchart of another voltage adjustment method according to an embodiment of this application.

As shown in FIG. 7, the method includes the following steps.

S201: An electronic device 100 starts a camera, where an aperture in the camera is at an initial f-number, and a drive voltage of a driver chip is a low voltage.

The camera of the electronic device 100 may include components such as a lens, the aperture, an aperture motor, the driver chip of the aperture motor, and a photosensitive chip. The driver chip of the aperture motor may drive the aperture motor, and control the focus motor to move an aperture blade, to further change an aperture size, a quantity of light captured on the photosensitive chip, and display effect of an image captured by the camera. For specific descriptions of the lens, the aperture, the aperture motor, the driver chip of the aperture motor, and the photosensitive chip, refer to the related content of the lens 193A, the aperture 193B, the aperture motor 193D, the driver chip 193E, and the photosensitive chip 193F in FIG. 1A. Details are not described herein again.

The f-number indicates a diameter size of the aperture. The f-number may be denoted by F. For example, F/1.4 indicates that the f-number is 1.4. A larger f-number indicates a smaller aperture, and a smaller f-number indicates a larger aperture.

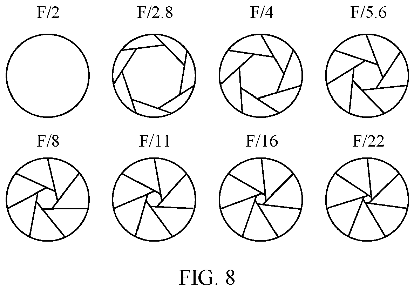

FIG. 8 shows examples of f-numbers included in the electronic device 100. As shown in FIG. 8, the electronic device 100 may include eight f-numbers: F/2, F/2.8, F/4, F/5.6, F/8, F/11, F/16, and F/22. Based on a sequence of the foregoing values, the aperture size gradually reduces. F/2 corresponds to a maximum aperture, and F/22 corresponds to a minimum aperture.

It should be understood that FIG. 8 is merely examples, and does not constitute a limitation on this embodiment of this application.

The electronic device 100 may start the camera in the following two cases:
(1) The electronic device 100 may start the camera when a shooting function is started.
(2) The electronic device 100 may start a switched camera when switching the camera.

For specific descriptions of an occasion at which the electronic device 100 starts the camera, refer to the related content in step S101. Details are not described herein again.

After the camera is started, the aperture in the camera is at the initial f-number, and the drive voltage of the driver chip of the aperture motor is a low voltage. The initial aperture may be a preset f-number. For example, when the electronic device 100 starts the camera, the f-number is F2.8 by default. For example, the low voltage may be a preset voltage, for example, 1.8 V. The initial f-number and the initial voltage are not limited in this embodiment of this application.

In this embodiment of this application, the low voltage may also be referred to as a third drive voltage.

S202: The electronic device 100 captures an image by using the camera.

The image is specifically an image obtained in a process in which reflected light of a shot object passes through the lens in the camera, is imaged on a photosensitive chip, and is further processed by another component, for example, an ISP, including linear correction, noise removal, point patching, color interpolation, white balance correction, and the like.

It should be understood that the electronic device 100 continuously captures an image by using the camera in a process in which the electronic device 100 uses the camera. After adjusting the aperture, the electronic device 100 also always keeps capturing an image by using the camera. In other words, in a process of adjusting the aperture, the electronic device 100 may obtain images captured by using the camera before and after the aperture is adjusted. In addition, after the electronic device 100 starts the camera, the electronic device 100 may display, in a user interface, for example, a preview interface, or a viewfinder, an image captured by the camera in real time.

S203: The electronic device 100 determines a target f-number.

The electronic device 100 may trigger determining the target f-number in the following two cases:
(1) The electronic device 100 detects a user operation of adjusting the aperture, and triggers determining the target f-number.

The user operation may be an operation of adjusting the f-number. For example, an operation on a control of adjusting an aperture parameter in a user interface, or an operation on a physical button or a scroll wheel corresponding to the f-number on the electronic device 100.

In this case, the electronic device 100 may determine, based on the user operation, the target f-number set by the user.

(2) The electronic device 100 triggers determining the target f-number when starting automatic exposure.

Automatic exposure means that the electronic device 100 automatically adjusts an exposure parameter used when the camera captures the image, so that the image reaches an appropriate grayscale range, that is, image brightness is equal to a threshold, to prevent the image being overexposed or underexposed. The appropriate grayscale range may be an intermediate grayscale value, 18%. The exposure parameter includes an f-number, a shutter speed, and a brightness gain.

In an automatic exposure algorithm, the electronic device 100 may adjust the exposure parameter by using a table lookup method, an iteration method, a numerical statistics method, or the like. For example, when the electronic device 100 adjusts the exposure parameter by using the table lookup method, the electronic device 100 may pre-store a lookup table of an exposure parameter and image brightness. The electronic device 100 may find an appropriate exposure parameter based on brightness of a current image, to further obtain the target f-number. Brightness of an image captured by the camera under the appropriate exposure parameter is equal to the threshold. It should be understood that a method for determining the target f-number in an automatic exposure process is not limited in this embodiment of this application.

For the f-number, the electronic device 100 may determine the target f-number based on the brightness of the current image in the automatic exposure process. Specifically, when the brightness of the current image is less than the threshold, the aperture needs to be increased, that is, an f-number is reduced based on the initial f-number, and an amount of incident light is increased, so that the image brightness is equal to the threshold. In this case, the target f-number is less than the initial f-number. When the brightness of the current image is greater than the threshold, the aperture needs to be reduced, that is, an f-number is increased based on the initial f-number, and an amount of incident light is reduced, so that the image brightness is equal to the threshold. In this case, the target f-number is greater than the initial f-number.

The image brightness means a brightness degree of a picture. The electronic device 100 may determine the image brightness by calculating an average value of image brightness on each channel, or convert the image into a grayscale image, and use an average pixel value as the image brightness. It should be understood that a manner of calculating the image brightness is not limited in this embodiment of this application.

For example, the electronic device 100 may trigger automatic exposure when the shooting function is just started, or the electronic device 100 may trigger automatic exposure when detecting a change in light of a surrounding environment, or the electronic device 100 may trigger automatic exposure when switching the camera. An occasion at which the electronic device 100 triggers automatic exposure is not limited in this embodiment of this application.

It should be understood that, in this embodiment of this application, only adjustment of the aperture size in the automatic exposure algorithm is described in detail. However, in the solution of this application, in an actual automatic exposure process, a shutter speed and a brightness gain may be further adjusted. In other words, during calculation of the exposure parameter, in addition to determining the f-number based on the image brightness, the electronic device 100 further obtains the shutter speed and the brightness gain through calculation. When adjusting the aperture size, the electronic device 100 adjusts the shutter speed and the brightness gain based on the shutter speed and the brightness gain that are obtained through calculation, so that the image brightness is equal to the threshold.

In this embodiment of this application, the target f-number may also be referred to as a first value.

S204: The electronic device 100 determines an operating mode of the aperture motor based on the target f-number.

The aperture motor has two operating modes: an open-loop mode and a closed-loop mode.

When the f-number is a maximum or a minimum value, the aperture motor operates in the open-loop mode. Specifically, when the electronic device 100 determines that the target f-number is the maximum value or the minimum value, the electronic device 100 determines that the operating mode of the aperture motor is the open-loop mode, so that the aperture motor adjusts the aperture to a maximum aperture or a minimum aperture in the open-loop mode.

In this case, in the open-loop mode, the aperture motor needs to generate, based on a specified current, a specific pushing force under an action of the current, to push the aperture blade, to adjust the aperture to the maximum aperture or the minimum aperture.

When the f-number is between the maximum value and minimum value, the aperture motor operates in the closed-loop mode. Specifically, when the electronic device 100 determines that the target f-number is between the maximum value and the minimum value, the electronic device 100 determines that the operating mode of the aperture motor is the closed-loop mode, so that the aperture motor adjusts the f-number of the aperture to the target f-number in the closed-loop mode.

In the closed-loop mode, the driver chip may use a position to which the aperture motor pushes the aperture blade as a feedback amount, and reversely adjust the pushing force of the aperture motor, to push the aperture blade to a target position corresponding to the target f-number more precisely. For example, when the aperture motor pushes the aperture blade under the action of the pushing force 1, so that a position to which the aperture blade moves exceeds the target position, the pushing force of the aperture motor is reduced, and the aperture blade is pushed with a pushing force less than the pushing force 1, so that the aperture blade approaches or moves to the target position. When the aperture motor pushes the aperture blade under the action of the pushing force 2, so that the position to which the aperture blade moves does not reach the target position, the pushing force of the aperture motor is increased, the aperture motor pushes the aperture blade with a pushing force larger than the pushing force 2, and so on, so that the aperture blade reaches and keeps in the target position.

In this case, in the closed-loop mode, the aperture motor needs to push, based on the specified target position of the aperture blade, the aperture blade to the target position under a dynamically changing current provided by the driver chip, to adjust the f-number to the target f-number.

Herein, because the aperture blade is moved to change the position due to the pushing force applied by the motor, the target position of the aperture blade may also mean a motor stroke of the aperture motor. This is not limited in this embodiment of this application.

In other words, the target f-number determines the operating mode of the aperture motor. Specifically, when the target f-number is the maximum value or the minimum value of the aperture, the electronic device 100 determines that the operating mode of the aperture motor is the open-loop mode; when the target f-number is not the maximum value or the minimum value of the aperture, the operating mode of the aperture motor is the closed-loop mode.

In addition, it should be noted that, because movement precision of the aperture motor in the open-loop mode is not as high as movement precision of the aperture motor in the closed-loop mode, in an actual physical structure of the aperture, a slot is disposed in a position where the aperture is adjusted to a maximum aperture and a position where the aperture is adjusted to a minimum aperture. In a movement process of the aperture blade, movement of the aperture blade may be physically more precise by using the slot.

It should be understood that the aperture motor may alternatively include only a closed-loop operating mode. In this case, in any target f-number, the aperture motor changes the diameter size of the aperture in the closed-loop operating mode, to adjust the f-number to the target f-number. Alternatively, the aperture motor may include only an open-loop operating mode. In this case, in any target f-number, the aperture motor changes the diameter size of the aperture in the open-loop operating mode, to adjust the f-number to the target f-number. In this embodiment of this application, the operating mode of the aperture motor, and the target f-number during aperture adjustment in different operating modes are not limited.

S205: The electronic device 100 determines whether the operating mode is an open-loop mode.

When the operating mode of the aperture motor is the open-loop mode, the electronic device 100 performs step S206; when the operating mode of the aperture motor is not the open-loop mode, the electronic device 100 performs step S210.

It may be understood that step S204 and step S205 are optional steps. When the aperture in the electronic device 100 includes only the open-loop mode, the electronic device 100 may directly perform step S206 after performing step S203. Alternatively, when the aperture in the electronic device 100 includes only the closed-loop mode, the electronic device 100 may directly perform step S210 after performing step S203. Alternatively, when the aperture in the electronic device 100 includes the two operating modes, namely, the open-loop mode and the closed-loop mode, the electronic device 100 further performs step S204 after performing step S203, to determine the operating mode of the aperture and choose, based on the operating mode of the aperture, to perform steps S206 to S209 or steps S210 to S213.

S206: The electronic device 100 separately determines currents of the aperture motor at a high voltage and a low voltage based on the target f-number.

Under driving of a high voltage and a low voltage, the currents at a high voltage and a low voltage are currents that are separately transmitted by the driver chip to the aperture motor. A current at a high voltage may cause the aperture motor to move the aperture blade to a specific position, and a current at a low voltage may cause the aperture blade to keep in the position.

In the open-loop mode, the focus motor may generate, based on the current provided by the driver chip, a specific pushing force to push the aperture blade to a specific position, to adjust the f-number of the aperture to a corresponding f-number under the current. Further, after the aperture blade reaches the specific position, due to impact of a friction force, the focus motor may provide a smaller pushing force, to cause the aperture blade to still keep in a currently arrived position and ensure that the f-number keeps unchanged. In other words, after aperture adjustment is completed, the driver chip may reduce the current provided for the focus motor. It can be learned that the driver chip reduces the current provided for the focus motor. This can reduce the current of the driver chip, and further reduce power consumption of the driver chip.

Therefore, after aperture adjustment ends, when reducing the voltage of the driver chip from a high voltage to a low voltage, the electronic device may further adjust the current provided by the driver chip for the aperture motor from a high voltage to a low voltage.

Specifically, the electronic device 100 may pre-store a mapping table of an f-number, a voltage of the driver chip, and a current of the aperture motor. The mapping table indicates different f-numbers, and currents of the aperture motor corresponding to different voltages of the driver chip. For example, Table 2 shows a mapping table of an f-number, a voltage of the driver chip, and a current.

**Table 2**

| F-number Current Voltage | Voltage A (high voltage) | Voltage B (low voltage) |
|---|---|---|
| F1 | I_{A1} | I_{B1} |
| F2 | I_{A2} | IB2 |
| F3 | I_{A3} | I_{B3} |
| ... | ... | ... |

The current and the voltage in Table 2 are the current of the aperture motor and the voltage of the driver chip when the aperture blade is pushed to move. Under driving of a specific voltage, the driver chip inputs a specific current to the aperture motor, to cause the aperture motor to apply a specific pushing force to the aperture blade to move the aperture blade to a specific position, so that the f-number reaches a corresponding value. For example, under driving of the voltage A, the driver chip provides a current with a magnitude of I_{A1} for the aperture motor, to adjust the f-number of the aperture to F1.

In addition, the voltage A and the voltage B may respectively indicate a high voltage and a low voltage based on magnitudes of the voltage A and the voltage B, and respectively indicate voltages of the driver chip when the aperture is adjusted and when the aperture is not adjusted. It can be learned from Table 2 that, after the target f-number is determined, a current at a high voltage and a current at a low voltage that correspond to the target f-number may be found based on the target f-number.

It should be understood that the mapping table of the f-number, the voltage of the driver chip, and the current of the aperture motor may be currents that are transmitted by the driver chip to the aperture motor under driving of different voltages, and that are obtained through a test in which a developer adjusts the aperture to a specific f-number in advance and then keeps the position of the aperture blade unchanged. In addition, when the focus motor adjusts the aperture to adjust the f-number to a specific value, and a current required by the focus motor is a maximum current that can be provided by the driver chip under driving of a specific voltage, the electronic device 100 may not need to store a current corresponding to the voltage under the f-number. In this case, under driving of the specific voltage, the actual driver chip provides, by default, the maximum current that can be provided under the voltage for the aperture motor.

In addition, during specific implementation, the current may be indicated as a code value that can be identified by the driver chip, and different code values are used to correspond to currents of different magnitudes. The electronic device 100 may determine code values at a high voltage and a low voltage based on the target f-number, and the driver chip may determine, based on the code value, the magnitude of the current transmitted to the aperture motor. Specific descriptions of the code value are similar to those of the parameter that indicates the target position of the lens, namely, the code value, and that is determined by the electronic device 100 in step S103. Reference may be made correspondingly, and details are not described herein again.

In some implementations, the electronic device 100 may alternatively determine only a current at a high voltage but not a current at a low voltage. In this case, after completing aperture adjustment, the driver chip may adjust the voltage of the driver chip to a low voltage, and provide, by default, the maximum current that can be provided by the driver chip for the aperture motor at the low voltage, so that the aperture motor can still keep the position of the aperture blade unchanged under an action of the maximum current.

In this embodiment of this application, the current at a high voltage may also be referred to as a third current, and the current at a low voltage may also be referred to as a fourth current.

S207: The electronic device 100 adjusts the drive voltage of the driver chip to a high voltage.

Before the size of the aperture is adjusted, the drive voltage of the driver chip of the aperture motor is first adjusted to a high voltage. Before driving the aperture motor, the driver chip may transfer voltage increase indication information to a power management module, and the power management module increases the voltage provided for the driver chip.

For example, as shown FIG. 2, the power management module may switch the voltage pin connected to the driver chip 2 from the low voltage pin to the high voltage pin, to adjust the voltage provided by the power management module for the driver chip 2 from a low voltage to a high voltage.

In some implementations, values of the high voltage are different when the f-numbers are different. Specifically, when the target f-number is the first value, the high voltage is a first voltage; or when the target f-number is the second value, the high voltage is a second voltage. When the target f-number is adjusted to the first value, compared with when the target f-number is adjusted to the second value, a pushing force applied by the aperture motor is larger, the first voltage is higher than the second voltage. In this way, when adjusting the aperture size, the electronic device 100 may dynamically adjust, based on the pushing force applied for adjusting the aperture, the magnitude of the drive voltage of the driver chip when adjusting the aperture. For example, when the f-number is smaller, the applied pushing force is smaller, and the drive voltage of the driver chip is lower when the aperture is adjusted.

It may be understood that, when f-numbers are different, the driver chip uses a same high voltage as the drive voltage for each aperture adjustment, so that time for determining the drive voltage of the driver chip based on the f-number before aperture adjustment may be saved, and an aperture adjustment speed is increased. Then, in this case, the high voltage needs to ensure that when any f-number of the aperture of the electronic device 100 is adjusted, the current provided by the driver chip for the aperture motor can meet a sufficient pushing force that needs to be provided by the aperture motor in an adjustment process. For example, when the focus motor is a centering motor, the focus motor applies a maximum pushing force when adjusting the aperture to the maximum aperture or the minimum aperture, and then the maximum current that the driver chip can provide for the aperture motor under this high voltage should ensure that the aperture motor can adjust the aperture to the maximum or minimum aperture.

In this embodiment of this application, the high voltage may also be referred to as a first drive voltage.

S208: The electronic device 100 enables the driver chip to transmit, under driving of the high voltage, the current at the high voltage to the aperture motor, to control the aperture motor to adjust the f-number of the aperture to the target f-number.

The aperture motor may generate a specific pushing force (for example, a first pushing force) under the action of the current at the high voltage, to push the aperture blade to a specific position, to adjust the f-number of the aperture to the target f-number.

S209: The electronic device 100 adjusts the drive voltage of the driver chip to a low voltage, and adjusts the current transmitted by the driver chip to the aperture motor to a current at a low voltage.

When the driver chip is under driving of the low voltage, the current provided by the driver chip for the aperture motor can cause a pushing force (for example, a second pushing force) applied by the aperture motor to the aperture blade to ensure that the position of the aperture blade keeps unchanged.

After the aperture size is adjusted, the electronic device 100 may adjust the drive voltage of the driver chip back to a low voltage, to reduce power consumption of the driver chip. Further, the driver chip may further adjust the current of the aperture motor to the current at a low voltage, so that the aperture motor can further reduce the power consumption of the driver chip under an action of the current when keeping the position of the aperture blade unchanged.

Optionally, the electronic device 100 may adjust only the drive voltage of the driver chip to a low voltage. In this case, under an action of the low voltage, the driver chip may provide, by default, the aperture motor with a maximum current that can be provided by the driver chip at the low voltage.

In this embodiment of this application, the low voltage herein may also be referred to as a second drive voltage.

S210: The electronic device 100 determines the target position of the aperture blade based on the target f-number.

In the closed-loop mode, the electronic device 100 may adjust, based on the position to which the aperture blade moves, the pushing force applied by the focus motor to the aperture blade, so that the aperture blade can move and keep in the target position corresponding to the target size.

Therefore, the electronic device 100 may pre-store a mapping table of an f-number and a position of the aperture blade, and the mapping table indicates a correspondence between the f-number and the position of an aperture blade. When the electronic device 100 determines the target position of the aperture blade, the electronic device 100 may determine, by using the mapping table, the target position of the aperture blade corresponding to the target f-number. The mapping table may be obtained by a developer by testing positions of the aperture blade under different f-numbers.

It should be understood that, when the aperture blade is at the target position, the diameter size of the aperture may be a target size (for example, a first size). In this embodiment of this application, the determining the target position of the aperture blade based on the target f-number is equivalent to determining the target diameter size of the aperture. Similarly, controlling the aperture blade to move to the target position is equivalent to controlling the diameter of the aperture to be adjusted to the target size. In other words, the position of the aperture blade may be replaced with the diameter size of the aperture, and details are not described below.

S211: The electronic device 100 adjusts the drive voltage of the driver chip to a high voltage.

Similar to step S207, before the size of the aperture is adjusted, the drive voltage of the driver chip of the aperture motor is first adjusted to a high voltage. For specific descriptions of adjusting the drive voltage of the driver chip to the high voltage, refer to the related descriptions of step S207. Details are not described herein again.

S212: The electronic device 100 enables the driver chip to control, under driving of the high voltage, the aperture motor to move the aperture blade to the target position, to adjust the f-number of the aperture to the target f-number.

The driver chip outputs a current to the aperture motor under driving of the high voltage. The aperture motor generates a pushing force under an action of the current to push the aperture blade. The driver chip adjusts, based on the position to which the aperture blade moves, the current output to the aperture motor, to further adjust the position to which the aperture blade moves until the aperture blade moves to the target position, to adjust the f-number to the target f-number.

In other words, the driver chip may provide one or more currents for the aperture motor, to drive the aperture motor to move the aperture blade to the target position, and adjust the f-number of the aperture to the target f-number. When the driver chip provides a plurality of currents to control the pushing force applied by the aperture motor, one of the currents is determined based on effect of aperture adjustment performed by the aperture motor when the driver chip previously provides a current for the aperture motor.

S213: The electronic device 100 adjusts the drive voltage of the driver chip to a low voltage.

After the aperture size is adjusted, the electronic device 100 may adjust the drive voltage of the driver chip to a low voltage, to reduce power consumption of the driver chip.

When the driver chip is under driving of the low voltage, the current provided by the driver chip for the aperture motor can cause a pushing force applied by the aperture motor to the aperture blade to ensure that the position of the aperture blade keeps unchanged.

In addition, in the closed-loop mode, the electronic device 100 may reversely adjust the pushing force of the aperture motor based on the position to which the aperture blade moves, to ensure that the position of the aperture blade keeps unchanged. Therefore, when the electronic device 100 adjusts the drive voltage of the driver chip to a low voltage, even if a voltage change in the driver chip causes a change in the current that can be provided by the driver chip for the aperture motor, the driver chip can also dynamically adjust, based on the position of the aperture blade, the current provided for the aperture motor, that is, the driver chip provides one or more currents for the aperture motor, so that the pushing force applied by the aperture motor to the aperture blade under the action of the current can still cause the position of the aperture blade keep unchanged.

Because the electronic device 100 is always in a state of capturing the image by using the camera after the camera is started, after the aperture is adjusted, the electronic device 100 may obtain an image captured by the camera after the aperture is adjusted. In addition, because the electronic device 100 may display, in real time, the image captured by the camera, in a process of adjusting the aperture, the electronic device 100 may display display effect of the image, for example, an image whose brightness and a depth of field change with a change in the aperture.

In a scenario of manually adjusting the aperture, an image captured by the camera after the aperture is adjusted is an image corresponding to the f-number set by the user. In the process of adjusting the aperture, the user may view the image whose brightness or depth of field changes with aperture adjustment by the user. In the automatic exposure scenario, an image captured by the camera after the aperture is adjusted is an image whose brightness is equal to the threshold. The image is neither extremely dark nor extremely bright, and a color and light of a scene that are observed by human eyes are truly restored. The user may view, by using the electronic device 100, an image whose brightness automatically changes.

In general, in the process of adjusting the aperture, the electronic device 100 may dynamically adjust the voltage of the driver chip of the aperture motor based on whether the aperture is adjusted. When the aperture does not need to move, the voltage of the driver chip is reduced, and only when the aperture is adjusted, the voltage of the driver chip is increased. This can prevent the drive voltage of the driver chip from being always in a high voltage, reduce power consumption of the driver chip in the automatic exposure process as much as possible, further improving power consumption of a currently operating camera module, and prolong standby time of the electronic device 100 in a process of using the camera.

It should be understood that the steps in the foregoing method embodiments may be completed by using an integrated logic circuit of hardware in the processor or instructions in a form of software. The steps of the methods disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, so that the electronic device performs the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

This application further provides a computer program product. The computer program product includes a computer program (which may also be referred to as code or instructions). When the computer program is run, a computer is enabled to perform the method performed by the electronic device 100 in any one of the foregoing embodiments.

This application further provides a computer-readable storage medium. The computer-readable storage medium stores a computer program (which may also be referred to as code or instructions). When the computer program is run, a computer is enabled to perform the method performed by the electronic device 100 in any one of the foregoing embodiments.

It should be noted that the processor in embodiments of this application may be an integrated circuit chip, and has a signal processing capability. In an implementation process, the steps in the foregoing method embodiments may be completed by using an integrated logic circuit of hardware in the processor or instructions in a form of software. The foregoing processor may be a general-purpose processor, a digital signal processor (digital signal processor, DSP), an application-specific integrated circuit (Application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed through a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the methods in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

The implementations of this application may be randomly combined to achieve different technical effects.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Persons of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A voltage adjustment method, wherein the method is applied to an electronic device comprising a camera, the camera comprises a lens, a motor, and a driver chip, and the method comprises:
starting, by the electronic device, the camera, and capturing an image by using the camera;
providing, by the electronic device, a first drive voltage for the driver chip, to drive the motor to move the lens to a first position; and
providing, by the electronic device, a second drive voltage for the driver chip, to drive the motor to move the lens to a second position, wherein the second drive voltage is different from the first drive voltage, and the second position is different from the first position.

2. The method according to claim 1, wherein the second drive voltage is higher than the first drive voltage, a distance between the second position and a third position is greater than a distance between the first position and the third position, and the third position is a position of the lens when the motor does not move the lens.

3. The method according to claim 1 or 2, wherein the method further comprises:
providing, by the electronic device, a third drive voltage for the driver chip, to drive the motor to move the lens to the first position, wherein
a posture of the electronic device when the electronic device provides the third drive voltage is different from a posture of the electronic device when the electronic device provides the first drive voltage, and the third drive voltage is different from the first drive voltage.

4. The method according to claim 3, wherein the posture of the electronic device is an included angle between a plane of the lens and a horizontal plane; when the electronic device provides the third drive voltage, the plane of the lens and the horizontal plane are at a first included angle; when the electronic device provides the first drive voltage, the plane of the lens and the horizontal plane are at a second included angle; and the first included angle is less than the second included angle, and the third drive voltage is higher than the first drive voltage.

5. The method according to any one of claims 1 to 4, wherein definition of an image captured by the camera when the lens is at the second position is higher than definition of an image captured by the camera when the lens is at a position other than the second position; and
after the providing, by the electronic device, a second drive voltage for the driver chip, to drive the motor to move the lens to a second position, the method further comprises:
continuously providing, by the electronic device, a fourth drive voltage for the driver chip, to drive the motor to keep the lens at the second position.

6. The method according to any one of claims 1 to 5, wherein the first position and the second position are determined based on an operation that is input by a user to adjust a position of the lens.

7. The method according to any one of claims 1 to 6, wherein after the capturing, by the electronic device, an image by using the camera, the method further comprises:
displaying, by the electronic device, the image captured by using the camera, wherein definition of an image captured by the electronic device when the lens is at the first position is different from definition of an image captured when the lens is at the second position.

8. The method according to any one of claims 1 to 7, wherein the method further comprises:
when starting the camera, providing, by the electronic device, the fourth drive voltage for the driver chip, to drive the motor to move the lens to a fourth position, wherein the fourth drive voltage is a preset voltage.

9. A voltage adjustment method, wherein the method is applied to an electronic device comprising a camera, the camera comprises an aperture, a motor, and a driver chip, and the method comprises:
starting, by the electronic device, the camera, and capturing an image by using the camera;
providing, by the electronic device, a first drive voltage for the driver chip, to drive the motor to change a diameter size of the aperture, for adjusting an f-number of the aperture to a first value; and
adjusting, by the electronic device, the first drive voltage to a second drive voltage, wherein the first drive voltage is higher than the second drive voltage.

10. The method according to claim 9, wherein the providing, by the electronic device, a first drive voltage for the driver chip specifically comprises:
adjusting, by the electronic device, a voltage provided for the driver chip from a third drive voltage to the first drive voltage, wherein the third drive voltage is lower than the first drive voltage.

11. The method according to claim 9 or 10, wherein the providing, by the electronic device, a first drive voltage for the driver chip, to drive the motor to change a diameter size of the aperture, for adjusting an f-number of the aperture to a first value specifically comprises:
providing, by the electronic device, the first drive voltage for the driver chip, and providing one or more currents for the motor by using the driver chip, to drive the motor to adjust the diameter size of the aperture to a first size, for adjusting the f-number of the aperture to the first value, wherein
the plurality of currents comprise a first current and a second current, and the second current is determined based on a diameter size of the aperture that is adjusted by the motor under an action of the first current.

12. The method according to claim 11, wherein after the adjusting, by the electronic device, the first drive voltage to a second drive voltage, the method further comprises:
providing, by the electronic device, one or more currents for the motor by using the driver chip, to drive the motor to keep the diameter size of the aperture at the first size.

13. The method according to claim 11 or 12, wherein the first value is an f-number of the aperture other than a maximum f-number and a minimum f-number.

14. The method according to claim 9 or 10, wherein the providing, by the electronic device, a first drive voltage for the driver chip, to drive the motor to change a diameter size of the aperture, for adjusting an f-number of the aperture to a first value specifically comprises:
providing, by the electronic device, the first drive voltage for the driver chip, and providing a third current for the motor by using the driver chip, to cause the motor to generate a first pushing force to change the diameter size of the aperture, for adjusting the f-number of the aperture to the first value.

15. The method according to claim 14, wherein after the adjusting, by the electronic device, the first drive voltage to a second drive voltage, the method further comprises:
providing, by the electronic device, a fourth current for the motor by using the driver chip, to cause the motor to keep a change in the diameter size of the aperture under an action of a second pushing force.

16. The method according to claim 14 or 15, wherein the first value is a maximum f-number or a minimum f-number of the aperture.

17. The method according to claim 15 or 16, wherein the electronic device pre-stores the third current and/or the fourth current.

18. The method according to any one of claims 9 to 17, wherein the first value is an f-number of the aperture when brightness of the image captured by the electronic device is equal to a threshold.

19. The method according to any one of claims 9 to 18, wherein the method further comprises:
detecting, by the electronic device, a second operation, wherein the second operation is used to indicate the first value.

20. The method according to any one of claims 9 to 19, wherein after the capturing, by the electronic device, an image by using the camera, the method further comprises:
displaying, by the electronic device, the image captured by using the camera, wherein brightness and/or a depth of field of the captured image are/is different before and after the electronic device adjusts the f-number to the first value.

21. An electronic device, comprising a camera, a memory, one or more processors, and one or more programs, wherein the camera comprises a lens, a motor, and a driver chip; and when the one or more processors execute the one or more programs, the electronic device is enabled to implement the method according to any one of claims 1 to 8.

22. An electronic device, comprising a camera, a memory, one or more processors, and one or more programs, wherein the camera comprises an aperture, a motor, and a driver chip; and when the one or more processors execute the one or more programs, the electronic device is enabled to implement the method according to any one of claims 9 to 20.

23. A computer-readable storage medium, comprising instructions, wherein when the instructions are run on an electronic device, the electronic device is enabled to perform the method according to any one of claims 1 to 8, or 9 to 20.

24. A computer program product, wherein when the computer program product runs on a computer, the computer is enabled to perform the method according to any one of claims 1 to 8, or 9 to 20.
